(19) Europäisches Patentamt
European Patent Office
Office européen des brevets

(11) EP 3 392 062 B1

# (12) EUROPEAN PATENT SPECIFICATION

(45) Date of publication and mention of the grant of the patent:
**03.02.2021 Bulletin 2021/05**

(21) Application number: **16875640.1**

(22) Date of filing: **13.12.2016**

(51) Int Cl.:
***B60C 5/01*** *(2006.01)* ***B60C 1/00*** *(2006.01)*
***B60C 9/20*** *(2006.01)* ***B60C 9/22*** *(2006.01)*
***B60C 5/00*** *(2006.01)* ***B60C 9/00*** *(2006.01)*

(86) International application number:
**PCT/JP2016/087067**

(87) International publication number:
**WO 2017/104663 (22.06.2017 Gazette 2017/25)**

(54) **TIRE**

REIFEN

PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2015 JP 2015245423**

(43) Date of publication of application:
**24.10.2018 Bulletin 2018/43**

(73) Proprietor: **Bridgestone Corporation**
**Tokyo 104-8340 (JP)**

(72) Inventors:
- **NAKAKITA, Yukinori**
**Tokyo 104-8340 (JP)**
- **FUDEMOTO, Hiroyuki**
**Tokyo 104-8340 (JP)**

(74) Representative: **Oxley, Robin John George**
**Marks & Clerk LLP**
**15 Fetter Lane**
**London EC4A 1BW (GB)**

(56) References cited:
**WO-A1-2014/175452**
**WO-A1-2014/175453**
**WO-A1-2017/002872**
**JP-A- H0 379 401**
**JP-A- H03 143 702**
**JP-A- S58 174 474**
**JP-A- 2002 331 806**
**JP-A- 2007 193 001**
**JP-A- 2010 053 495**
**JP-A- 2013 180 615**
**JP-A- 2013 544 900**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 392 062 B1

## Description

[Technical Field]

The present disclosure relates to a tire.

[Background Art]

In recent years, development of tires using a resin material as a structural member has been progressing in view of reducing weight, ease of molding, ease of recycling and the like. As a method for improving the durability (resistance to stress, resistance to inner pressure, and rigidity) of a tire including a resin material, a method of winding a reinforcing cord around a main body of a tire formed of resin (hereinafter, also referred to as a tire frame) in a spiral manner has been proposed.

In order to improve the durability of a tire having a structure as mentioned above, it is important to improve adhesion durability of a tire frame and a reinforcing cord. In view of this, for example, a method for lessening a difference in rigidity between a metal cord and a tire frame by coating a metal cord such as a steel cord with a resin material so as to improve adhesion durability of the tire frame and the metal cord has been proposed.

As a method of coating a metal cord with a resin material, a method of causing a metal cord to adhere to a resin layer that coats the metal cord, the adhesive layer including a thermoplastic resin, has been proposed (see, for example, International Publication (WO) No. 2014/175453).

[Summary of the Invention]

[Problem to be Solved by the Invention]

In the method described in International Publication (WO) No. 2014/175453, a metal cord and a resin layer can be strongly adhered due to adhering the metal cord and the resin layer by using an adhesive layer. However, since a resin tends to have a higher water permeability as compared to a rubber, there is a need to consider an effect (rust or hygrothermal aging such as decrease in adhesion with respect to an adhesive layer) of mositure, which has permeated an adhesive layer and a resin layer, on a metal cord.

One example of a method for suppressing permeation of moisture through an adhesive layer and a resin layer may be decreasing the amount of permeation of moisture by increasing the thickness of the adhesive layer and the resin layer surrounding the metal cord. However, an increase in thickness of the adhesive layer and the resin layer increases the thickness of a reinforcing cord (i.e., a metal cord covered with an adhesive layer and a resin layer) may cause a decrease in the number of reinforcing cords that can be wound around a tire frame, thereby resulting in a reduction in resistance to pressure (especially resistance to inner pressure) due to an insufficient reinforcing effect. Another example may be forming an adhesive layer and a resin layer with a resin material having low water permeability. However, a resin material having low water permeability tends to be rigid and may affect other properties required of a tire.

In view of the above, a tire having an excellent resistance to inner pressure and an excellent resistance to moisture is anticipated.

[Means for Implementing the Invention]

A tire comprising a tire frame that comprises a resin material and has a circular shape, and a belt portion that comprises a metal-resin composite that is disposed around the tire frame,
the metal-resin composite having a structure in which a metal member, an adhesive layer and a resin layer are disposed in this order, and satisfying the following Formula (1) and Formula (2):

$$\text{Formula (1): } 23 \leqq \text{number of metal-resin composites in the belt portion / width of the belt portion (mm)} \times 100$$

$$\text{Formula (2): } 1 / \{(a/A)+(b/B)\} \leqq 210$$

wherein, in Formula (2), A is a water permeation index of the resin layer that is from 50 g • mm/($m^2$ • day) to 600 g •

mm/($m^2$ • day), B is a water permeation index of the adhesive layer that is from 5 g • mm/($m^2$ • day) to 300 g • mm/($m^2$ • day), a is a thickness of the resin layer that is from 0.015 mm to 1.5 mm and b is a thickness of the adhesive layer that is from 0.005 mm to 0.2 mm.

[Effect of the Invention]

According to the disclosure, a tire that uses a metal-resin composite and exhibits an excellent resistance to inner pressure and an excellent resistance to moisture and heat is provided.

[Brief Explanation of the Drawings]

Fig. 1A is a perspective view of a section of an exemplary embodiment of the tire.
Fig. 1B is a sectional view of the bead portion of the tire attached to a rim.
Fig. 2 is a sectional view cut along the rotation axis of the tire showing a state in which a metal-resin composite is embedded in a crown portion of a tire frame.
Fig. 3 is a drawing illustrating how a metal-resin composite is embedded in a crown portion of a tire frame using a heater and rollers.

[Description of Embodiments]

In the following, embodiments of the disclosure are explained in detail. However, the disclosure is not limited to these embodiments.

In the specification, the "resin" refers to a concept that encompasses a thermoplastic resin, a thermoplastic elastomer and a thermosetting resin, but does not encompass a vulcanized rubber.

In the specification, the "resin of the same kind" refers to a resin having a skeleton of the main chain of the same kind, such as an ester skeleton or a styrene skeleton.

In the specification, the numerical range expressed by "A to B" includes A and B as the minimum and maximum values, respectively.

In the specification, the "process" refers not only an independent process but also a step that cannot be clearly distinguished from other processes.

The tire of the disclosure includes a tire frame that includes a resin material and has a circular shape, and a belt portion that includes a metal-resin composite that is disposed around the tire frame, the metal-resin composite having a structure in which a metal member, an adhesive layer and a resin layer are disposed in this order, and satisfying the following Formula (1) and Formula (2):

$$\text{Formula (1): } 23 \leqq \text{number of metal-resin composites in the belt portion / width of the belt portion (mm)} \times 100$$

$$\text{Formula (2): } 1 / \{(a/A)+(b/B)\} \leqq 210$$

In Formula (2), A is a water permeation index of the resin layer that is from 50 g • mm/($m^2$ • day) to 600 g • mm/($m^2$ • day), B is a water permeation index of the adhesive layer that is from 5 g • mm/($m^2$ • day) to 300 g • mm/($m^2$ • day), a is a thickness of the resin layer that is from 0.015 mm to 1.5 mm and b is a thickness of the adhesive layer that is from 0.005 mm to 0.2 mm.

The inventors have found that a tire in which a metal-resin composite in a belt portion of a tire frame satisfies Formula (1) and Formula (2) exhibits an excellent resistance to inner pressure and an excellent resistance to moisture and heat. This is considered to be because a sufficient number of metal-resin composites are disposed in a belt portion of a tire frame and a sufficient reinforcing effect is achieved by satisfying Formula (1), and permeation of water toward a metal cord is sufficiently suppressed by satisfying Formula (2).

In the following, a metal member, an adhesive layer and a resin layer, which constitutes a metal-resin composite included in the tire, are explained. Further, an embodiment of a tire frame used in an embodiment of a tire of the disclosure and a tire are explained.

The metal-resin composite has a structure in which a metal member, an adhesive layer and a resin layer are disposed in this order. The metal-resin composite may be, for example, in the shape of a cord. The shape of a section of the metal-resin composite is not specifically limited, and may be round, oval, polygonal and the like.

Examples of a specific structure of a belt including a metal-resin composite include a structure in which one or plural cords of metal-resin composite are disposed along a circumferential direction (belt layer) and a structure in which plural cords of metal-resin composite are disposed at an angle to a circumferential direction so as to cross one another (crossed belt layer).

The metal-resin composite is disposed around a tire frame in such a manner that Formula (1) is satisfied.

$$\text{Formula (1): } 23 \leqq \text{number of metal-resin composites in the belt portion / width of the belt portion (mm)} \times 100$$

In the specification, the "belt portion" refers to a portion in which the metal-resin composite is disposed around a tire frame.

The "number of metal-resin composites in the belt portion" refers to a number of the metal-resin composites that is observed in a section obtained by cutting a tire frame in a direction that is normal to a radial direction of a tire.

The "width of the belt" refers to a distance between the metal-resin compositions disposed at the ends of the belt (i.e., positions farthest from the center line of the tire frame in a width direction), and is a length along the outer circumference of the tire frame (mm).

For example, the value of the "number of metal-resin composites in the belt portion / width of the belt portion (mm) × 100", when the number of the metal-resin composites is 150 and the width of the belt portion is 200mm, is calculated as 150/200×100=75.

From the viewpoint of ensuring a sufficient resistance to inner pressure of a tire, the value of the "number of metal-resin composites in the belt portion / width of the belt portion (mm) × 100" is 23 or more, preferably 30 or more, more preferably 40 or more.

The upper limit of the value of the "number of metal-resin composites in the belt portion / width of the belt portion (mm) × 100" is not specifically limited. From the viewpoint of reducing the weight of a tire, the value is preferably 86 or less, more preferably 75 or less.

The metal-resin composite satisfies the following Formula (2).

$$\text{Formula (2): } 1 / \{(a/A)+(b/B)\} \leqq 210$$

In Formula (2), A is a water permeation index of the resin layer, B is a water permeation index of the adhesive layer, a is a thickness of the resin layer (mm), and b is a thickness of the adhesive layer (mm).

In the specification, A is a value measured by a method based on JIS K 7126-1:2006 using a test sample prepared from a resin layer or a material of the resin layer (g • mm/($m^2$ • day)). B is a value measured by the same method as A using a test sample prepared from an adhesive layer or a material of the adhesive layer (g • mm/($m^2$ • day)).

The lower limit of A is 50 g • mm/($m^2$ • day). From the viewpoint of durability, the value of A is 50 g • mm/($m^2$ • day) or more, preferably 100 g • mm/($m^2$ • day) or more, more preferably 150 g • mm/($m^2$ • day) or more.

The upper limit of A is 600 g • mm/($m^2$ • day). From the viewpoint of a resistance to degradation due to water, the value of A is 600 g • mm/($m^2$ • day) or less, preferably 400 g • mm/($m^2$ • day) or less, more preferably 300 g • mm/($m^2$ • day) or less.

The lower limit of B is 5 g • mm/($m^2$ • day). From the viewpoint of durability, the value of B is 5 g • mm/($m^2$ • day) or more, preferably 15 g • mm/($m^2$ • day) or more, more preferably 30 g • mm/($m^2$ • day) or more.

The upper limit of B is 300 g • mm/($m^2$ • day). From the viewpoint of a resistance to degradation due to water, the value of B is 300 g • mm/($m^2$ • day) or less, preferably 150 g • mm/($m^2$ • day) or less, more preferably 50 g • mm/($m^2$ • day) or less.

In the specification, the value of a is an arithmetic average value of a thickness of a resin layer as measured in randomly selected five SEM images of a section of a metal-resin composite, which are obtained by cutting the metal-resin composite in a direction in which a metal member, an adhesive layer and a resin layer are layered. The thickness of the resin layer in each SEM image is a value measured at a position with the least thickness of the resin layer (position with the least distance between an interface of the adhesive layer and the resin layer and an outer periphery of the metal-resin composite).

In the specification, the value of b is an arithmetic average value of a thickness of an adhesive layer as measured

in randomly selected five SEM images of a section of a metal-resin composite, which are obtained by cutting the metal-resin composite in a direction in which a metal member, an adhesive layer and a resin layer are layered. The thickness of the adhesive layer in each SEM image is a value measured at a position with the least thickness of the adhesive layer (position with the least distance between an interface of the metal member and the adhesive layer and an interface of the adhesive layer and the resin layer).

From the viewpoint of sufficiently suppressing the permeation of water, the value of 1/{(a/A)+(b/B)} is 210 or less, preferably 150 or less, more preferably 100 or less, further preferably 80 or less.

The lower limit of the value of 1/{(a/A)+(b/B)} is not specifically limited. From the viewpoint of durability, the value of 1/{ (a/A)+(b/B)} is preferably 23 or more, more preferably 30 or more, further preferably 50 or more.

The lower limit of the value of a is 0.015 mm. From the viewpoint of adhesion, the value of a is 0.015 mm or more, preferably 0.05 mm or more, more preferably 0.1 mm or more.

The upper limit of the value of a is 1.5 mm. From the viewpoint of durability, the value of a is 1.5 mm or less, preferably 1.0 mm or less, more preferably 0.8 mm or less.

The lower limit of the value of b is 0.005 mm. From the viewpoint of adhesion, the value of b is 0.005 mm or more, preferably 0.01 mm or more, more preferably 0.03 mm or more.

The upper limit of the value of b is 0.2 mm. From the viewpoint of durability, the value of b is 0.2 mm or less, preferably 0.18 mm or less, more preferably 0.15 mm or less.

From the viewpoint of durability, the value of c, which is a total thickness of the adhesive layer and the resin layer, is preferably less than 1.6 mm, more preferably 1.0 mm or less, further preferably 0.8 mm or less.

In the specification, the value of c is an arithmetic average value of a total thickness of an adhesive layer and a resin layer as measured in randomly selected five SEM images of a section of a metal-resin composite, which are obtained by cutting the metal-resin composite in a direction in which a metal member, an adhesive layer and a resin layer are layered. The total thickness of the adhesive layer and the resin layer in each SEM image is determined as a value measured at a position with the least thickness of the adhesive layer and the resin layer (position with the least distance between an interface of the metal member and the adhesive layer and an outer periphery of the metal-resin composite).

In view of achieving an excellent resistance to inner pressure while reducing the weight of a tire, the distance between metal members in adjacent metal-resin composites (hereinafter, also referred to as a distance between metal members) is preferably from 0.2 mm to 3.3 mm.

In the specification, the "adjacent metal-resin composites" refer to a metal-resin composite and a metal-resin composite that is disposed closest to the metal-resin composite. The adjacent metal-resin composites may be metal-resin composites that are different from each other, or may be different portions of a single metal-resin composite (for example, a metal-resin composite being wound around a tire frame for plural times).

In the specification, the "distance between metal members" refers to a value calculated by the following Formula (3). In Formula (3), n is a number of metal-resin composites included in a belt portion.

Formula (3): distance between metal members = {width of the belt portion- (thickness of the metal member × n)}/(n-1)

In Formula (3), the "thickness of the metal member" refers to an arithmetic average value of the randomly selected five measured values. When the metal member is a single metal cord, the measured value of the thickness refers to a maximum diameter of a section (a maximum value of a distance between the two points on a profile of a section of the metal member). When the metal member is formed of plural metal cords, the measured value of the thickness refers to a thickness of a smallest circle that encompasses all of the sections of the plural metal cords.

When metal members having different thicknesses are included in a belt portion, the thickness of a metal member with the greatest thickness is referred to as the "thickness of the metal member".

From the viewpoint of reducing the weight of a tire, the distance between the metal members is preferably 0.2 mm or more, more preferably 0.4 mm or more, further preferably 0.8 mm or more. From the viewpoint of a resistance to inner pressure, the distance between the metal members is preferably 3.3 mm or less, more preferably 2.5 mm or less, further preferably 2.1 mm or less.

From the viewpoint of achieving an excellent resistance to inner pressure while reducing the weight of a tire, the thickness of the metal-resin composite is preferably from 0.2 mm to 2 mm.

The thickness of the metal-resin composite is an arithmetic average value of randomly selected five measured values. The measured value of the thickness is determined as a maximum thickness of a section of the metal-resin composite (a maximum value of a distance between the two points on a profile of a section of the metal-resin composite).

From the viewpoint of reducing the weight of a tire, the thickness of the metal-resin composite is preferably 0.2 mm or more, more preferably 0.5 mm or more, further preferably 0.8 mm or more. From the viewpoint of improving a resistance to inner pressure, the thickness of the metal-resin composite is preferably 6.5 mm or less, more preferably 4 mm or less, further preferably 3 mm or less.

[Metal Member]

The metal member is not specifically limited. For example, a metal cord used in a conventional rubber tire or the like may be used as the metal member. The metal cord may be, for example, a monofilament formed of a single metal cord or a multifilament formed of twisted plural metal cords. From the viewpoint of further improving durability of a tire, a multifilament is preferred. The shape of a section, the size (diameter) or the like of the metal member is not specifically limited, and may be selected depending on a desired form of a tire.

When the metal member is formed of twisted plural metal cords, the number of the metal cords are not specifically limited. For example, the number of the metal cords may be selected from 2 to 10, preferably from 3 to 8.

From the viewpoint of achieving an excellent resistance to inner pressure while reducing the weight of a tire, the thickness of the metal member is preferably from 0.2 mm to 2 mm, more preferably from 0.8 mm to 1.6 mm. The thickness of the metal member refers to an arithmetic average value of randomly selected five measured values. The thickness of the metal member can be measured by a method as mentioned above.

The tensile elastic modulus of the metal member (hereinafter, the elastic modulus in the specification refers to a tensile elastic modulus, unless otherwise specified) is generally approximately from 100,000 MPa to 300,000 MPa, preferably from 120,000 MPa to 270,000 MPa, more preferably from 150,000 MPa to 250,000 MPa. The tensile elastic modulus of the metal member is calculated from a slope of a stress-strain curve obtained by using a tensile tester with a Zwick chuck.

The breaking elongation (tensile breaking elongation) of the metal member is generally approximately from 0.1% to 15%, preferably from 1% to 15%, more preferably from 1% to 10%. The tensile breaking elongation of the metal member is calculated from a strain of a stress-strain curve obtained by using a tensile tester with a Zwick chuck.

[Resin Layer]

The material for the resin layer is not specifically restricted as long as it satisfies the conditions of Formula (1) and Formula (2) as mentioned above. For example, at least one thermoplastic material selected from the group consisting of a thermoplastic resin and a thermoplastic elastomer may be used. From the viewpoint of mechanical durability, the resin layer preferably includes a thermoplastic elastomer, more preferably at least one selected from the group consisting of a polyamide thermoplastic resin and a polyamide thermoplastic elastomer.

In the specification, the "thermoplastic resin" refers to a polymer compound that softens and becomes fluid as the temperature increases and becomes relatively hard and rigid when it is cooled, but does not exhibit rubber-like elasticity.

In the specification, the "thermoplastic elastomer" refers to a copolymer of a polymer that constitutes a hard segment that has crystallinity and a high melting point or a high cohesive force, and a polymer that forms a soft segment that is amorphous and has a low glass transition point. A thermoplastic elastomer is a polymer that softens and becomes fluid as the temperature increases and becomes relatively hard and rigid when it is cooled, and exhibits rubber-like elasticity.

(Thermoplastic Resin)

Examples of the thermoplastic resin may be the same kind of those that may be used for a tire frame to be described later. Specific examples include polyamide thermoplastic resin, polyester thermoplastic resin, olefinic thermoplastic resin, polyurethane thermoplastic resin, polyvinyl chloride thermoplastic resin, and polystyrene thermoplastic resin. The thermoplastic resin may be used alone or in combination of two or more kinds. Among these, the thermoplastic resin is preferably at least one selected from the group consisting of polyamide thermoplastic resin, polyester thermoplastic resin and olefinic thermoplastic resin, more preferably at least one selected from the group consisting of polyamide thermoplastic resin and olefinic thermoplastic resin.

When the resin layer includes at least one of polyamide thermoplastic resin or olefinic thermoplastic resin, adhesion with respect to the adhesive layer as described later tends to increase. As a result, the metal member and the resin layer can be fixed more tightly, and the pulling durability of the metal member with respect to the resin layer can be further improved.

When the resin layer includes a thermoplastic resin, the type thereof is preferably selected in view of adhesion with respect to a resin material to be used for a tire frame. In particular, when the thermoplastic resin used for a tire frame is the same kind of resin as the thermoplastic resin included in the resin layer, adhesion between the tire frame and the resin layer can be further improved. For example, when a polyamide thermoplastic resin is selected as the thermoplastic resin included in the resin layer, it is preferred to select a polyamide thermoplastic resin as the resin material for forming a tire frame.

-Polyamide thermoplastic resin-

Examples of the polyamide thermoplastic resin include a polyamide that forms a hard segment of a polyamide thermoplastic elastomer to be used for a tire frame as described later.

Specific examples of the polyamide thermoplastic resin include a polyamide obtained by ring-opening polycondensation of ε-caprolactam (amide 6), a polyamide obtained by ring-opening polycondensation of undecane lactam (amide 11), a polyamide obtained by ring-opening polycondensation of lauryl lactam (amide 12), a polyamide obtained by polycondensation of a diamine and a dibasic acid (amide 66), and a polyamide having m-xylylenediamine as a constituent unit (amide MX).

Amide 6 may be expressed by $\{CO-(CH_2)_5-NH\}_n$, for example. Amide 11 may be expressed by $\{CO-(CH_2)_{10}-NH\}_n$, for example. Amide 66 may be expressed by $CO(CH_2)_4CONH(CH_2)_6NH\}_n$, for example. Amide MX may be expressed by the following Formula (A-1). In the formulas, n represents the number of repeating units.

As a commercial product of amide 6, for example, UBE NYLON series (such as 1022B and 1011FB) from Ube Industries, Ltd. can be used. As a commercial product of amide 11, for example, RILSAN B series from ARKEMA can be used. As a commercial product of amide 12, for example, UBE NYLON series (such as 3024U, 3020U and 3014U) from Ube Industries, Ltd. can be used. As a commercial product of amide 66, for example, UBE NYLON series (such as 2020B and 2015B) from Ube Industries, Ltd. can be used. As a commercial product of amide MX, for example, MX NYLON series (such as S6001, S6021 and S6011) from Mitsubishi Gas Chemical Company, Inc. can be used.

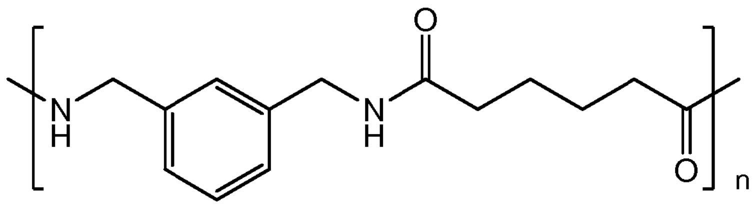

(A-1)

The polyamide thermoplastic resin may be a homopolymer that consists only of the aforementioned structural unit, or a copolymer of the structural unit and other monomers. The copolymer preferably includes the structural unit in an amount of 40% by mass or more.

-Polyester thermoplastic resin-

Examples of the polyester thermoplastic resin include a polyester that forms a hard segment of a polyester thermoplastic elastomer to be used for a tire frame to be described later.

Specific examples of the polyester thermoplastic resin include an aliphatic polyester such as polylactic acid, polyhydroxy-3-butyl butyrate, polyhydroxy-3-hexyl butylate, poly(ε-caprolactone), polyenanthonolactone, polycaprylolactone and polybutylene adipate, and an aromatic polyester such as polyethylene terephthalate, polybutylene terephthalate, polystyrene terephthalate, polyethylene naphthalate and polybutylene naphthalate. Among these, from the viewpoint of heat resistance and processability, polybutylene terephthalate is preferred.

As a commercial product of the polyester thermoplastic resin, for example, DURANEX series (such as 2000 and 2002) from Polyplastics Co., Ltd., NOVADURAN series (such as 5010R5 and 5010R3-2) from Mitsubishi Engineering-Plastics Corporation, and TORAYCON series (such as 1401X06 and 1401X31) from Toray Industries, Inc. may be used.

-Olefinic thermoplastic resin-

Examples of the olefinic thermoplastic resin include a polyolefin that forms a hard segment of an olefinic thermoplastic elastomer to be used for a tire frame to be described later.

Specific examples of the olefinic thermoplastic resin include polyethylene thermoplastic resin, polypropylene thermoplastic resin and polybutadiene thermoplastic resin. Among these, from the viewpoint of heat resistance and processability, polypropylene thermoplastic resin is preferred.

Specific examples of the polypropylene thermoplastic resin include a propylene homopolymer, a propylene-α-olefin random copolymer and a propylene-α-olefin block copolymer. Examples of the α-olefin include α-olefins having approximately from 3 to 20 carbon atoms such as propylene, 1-butene, 1-pentene, 3-methyl-1-butene, 1-hexene, 4-methyl-1-pentene, 3-methyl-1-pentene, 1-heptene, 1-octene, 1-decene, 1-dodecene, 1-tetradodecene, 1-hexadecene, 1-octadecene and 1-eicosene.

(Thermoplastic elastomer)

Examples of the thermoplastic elastomer include the thermoplastic elastomer to be used for a tire frame as described later.

Specific examples of the thermoplastic elastomer include polyamide thermoplastic elastomer, polyester thermoplastic elastomer, olefinic thermoplastic elastomer and polyurethane thermoplastic elastomer. The thermoplastic elastomer may be used alone or in combination of two or more kinds thereof.

Among these, the thermoplastic elastomer is preferably at least one selected from the group consisting of polyamide thermoplastic elastomer, polyester thermoplastic elastomer and olefinic thermoplastic elastomer, more preferably at least one selected from the group consisting of polyamide thermoplastic elastomer and olefinic thermoplastic elastomer. When at least one of polyamide thermoplastic elastomer or olefinic thermoplastic elastomer is used as a thermoplastic material included in the resin layer, adhesion between the adhesive layer, including a hot melt adhesive as described later, and the resin layer tends to increase. As a result, the metal member and the resin layer can be more tightly fixed and the pulling durability of the metal member with respect to the resin layer can be further improved.

When the resin layer includes a thermoplastic elastomer, it is preferably selected in view of adhesion with respect to the resin material to be used for a tire frame. In particular, when the thermoplastic elastomer used for a tire frame is the same kind of resin as the thermoplastic elastomer included in the resin layer, adhesion between the tire frame and the resin layer can be further improved. For example, when a polyamide thermoplastic elastomer is selected as the thermoplastic elastomer included in the resin layer, it is preferred to select a polyamide thermoplastic elastomer as the thermoplastic elastomer for forming a tire frame.

-Polyamide thermoplastic elastomer-

Examples of the polyamide thermoplastic elastomer may be the same as the examples of the polyamide thermoplastic elastomer to be used for a tire frame to be described later, and preferred embodiments are also the same. Therefore, details of the polyamide thermoplastic elastomer are not mentioned herein.

-Polyester thermoplastic elastomer-

Examples of the polyester thermoplastic elastomer may be the same as the examples of the polyester thermoplastic elastomer to be used for a tire frame to be described later, and preferred embodiments are also the same. Therefore, details of the polyester thermoplastic elastomer are not mentioned herein.

-Olefinic thermoplastic elastomer-

Examples of the olefinic thermoplastic elastomer may be the same as the examples of the olefinic thermoplastic elastomer to be used for a tire frame to be described later, and preferred embodiments are also the same. Therefore, details of the olefinic thermoplastic elastomer are not mentioned herein.

The resin layer may be in the form that includes both a thermoplastic resin and a thermoplastic elastomer, where the thermoplastic resin forms a matrix phase and the thermoplastic elastomer forms a domain phase (dispersed phase). When the resin layer has a sea-island structure in which the thermoplastic elastomer is dispersed in a matrix of the thermoplastic resin, pulling durability of the metal member with respect to the resin layer can be further improved.

The mass ratio of the thermoplastic resin (p) and the thermoplastic elastomer (e) in the sea-island structure (p/e) is preferably from 95/5 to 55/45, more preferably from 90/10 to 60/40, further preferably from 85/15 to 70/30.

Whether or not the domain phase including the thermoplastic elastomer is dispersed in the matrix including the thermoplastic resin in the resin layer can be determined by observing an image obtained with a SEM (scanning electron microscope).

The size (longest diameter) of the domain phase including the thermoplastic elastomer is preferably approximately from 0.4 $\mu$m to 10.0 $\mu$m, more preferably approximately from 0.5 $\mu$m to 7 $\mu$m, further preferably approximately from 0.5 $\mu$m to 5 $\mu$m. The size of the domain phase including the thermoplastic elastomer can be measured by observing an image obtained with a SEM.

(Other components)

The resin layer may include a component other than a resin. Examples of the other components include a rubber, an elastomer, a thermoplastic resin, a filler (such as silica, calcium carbonate and clay), an anti-aging agent, an oil, a plasticizer, a color former and a weathering stabilizer.

[Adhesive layer]

The material for the adhesive layer is not particularly limited as long as it satisfies the conditions of Formula (1) and Formula (2). For example, at least one thermoplastic material selected from the group consisting of a thermoplastic resin and a thermoplastic elastomer may be used. Since the temperature of the tire may become high while in use, it is preferred to use a material having a softening point of higher than 100°C at least as a main component.
Examples of the material for forming an adhesive layer include thermoplastic resin such as modified olefinic resin (such as modified polyethylene resin and modified polypropylene resin), polyamide resin, polyurethane resin, polyester resin, ethylene-ethyl acrylate copolymer and ethylene-vinyl acetate copolymer. Among these, from the viewpoint of adhesion between the metal member and the resin member, at least one selected from the group consisting of modified olefinic resin, polyester resin, ethylene-ethyl acrylate copolymer and ethylene-vinyl acetate copolymer is preferred, and modified olefinic resin that is modified with unsaturated carboxylic acid (acid-modified olefinic resin) is more preferred. The adhesive layer may include a single kind of thermoplastic material or may include two or more thereof.
The "modified olefinic resin that is modified with unsaturated carboxylic acid" refers to a modified olefinic resin obtained by subjecting polyolefin to graft copolymerization with unsaturated carboxylic acid.
Examples of the unsaturated carboxylic acid include acrylic acid, methacrylic acid, maleic acid, fumaric acid and itaconic acid. Examples of the olefinic resin include polyethylene resin, polypropylene resin and polybutadiene resin.
From the viewpoint of durability to environmental change such as temperature or humidity, favorable adhesion with respect to the metal member and the resin member, and excellent pulling durability of the metal member with respect to the resin member, the acid-modified olefinic resin is preferred, and at least one thermoplastic resin selected from the group consisting of a maleic acid-modified polyethylene resin and a maleic acid-modified polypropylene resin is more preferred.
From the viewpoint of improving adhesion and durability at low temperature, the resin layer preferably includes a thermoplastic resin and a thermoplastic elastomer. Examples of the thermoplastic elastomer include polyamide thermoplastic elastomer, polyester thermoplastic elastomer, polyolefin thermoplastic elastomer and styrene thermoplastic elastomer.
When the adhesive layer includes thermoplastic elastomer, the content thereof is preferably from 5% by mass to 40% by mass of the total adhesive layer, more preferably from 10% by mass to 35% by mass.

(Crystallinity)

When the adhesive layer includes a crystalline resin as the thermoplastic resin, the range of crystallinity may be regulated to be within a desired range in view of achieving adhesion of the adhesive layer and riding comfort. For example, when the adhesive layer includes an acid-modified polypropylene, which is a crystalline resin, the crystallinity of the adhesive layer is preferably from 16% to 44%. When the crystallinity of the adhesive layer is within this range, adhesion of the adhesive layer tends to improve. Improving adhesion of the adhesive layer by regulating the crystallinity thereof tends to suppress reduction in riding comfort caused by hardening of the adhesive layer, as compared with a case of forming the adhesion layer with a resin having a high elastic modulus.
In the specification, the crystallinity of the adhesive layer is a value as measured by DSC (differential scanning calorimetry). Specifically, a sample pellet is prepared by using the adhesive layer (or a material for the adhesive layer) and the amount of heat of melting is measured with a differential scanning calorimeter (TA Instruments, Q2000) by increasing the temperature from - 60°C to 220°C at a rate of 10°C/min. Subsequently, crystallinity is calculated from the measured value of the amount of heat of melting and a theoretical value of the amount of heat of melting of the crystalline resin in a fully crystal state.
When the sample includes a component other than the crystalline resin, the crystallinity is multiplied by the content of the crystalline resin (for example, multiplied by 0.7 when the content of the crystalline resin is 70% by mass). When the sample includes two or more kinds of crystalline resins, the crystallinity is calculated based on the respective measured values of the crystalline resins.
Examples of the method of regulating the crystallinity of the resin to be within a desired range include a heat treatment. The conditions for heating (temperature and time) are not particularly limited and may be selected depending on a desired degree of crystallinity. The crystal growth in the crystalline resin generally tends to be accelerated when heated at low temperature for a longer time, as compared with a case of heating at high temperature for a short time. Other factors such as the type or content of the resin, thickness of the adhesive layer, structure of a tire during heat treatment (such as thickness of a tread) are also involved in the crystallinity, and a desired degree of the same can be obtained by regulating the conditions for heat treatment in consideration of these factors.
The timing for performing the heat treatment to regulate the crystallinity of the resin is not particularly limited. For example, the heat treatment may be performed along with vulcanization of a tread rubber that is disposed around a tire frame after positioning the metal-resin composite, or may be performed to the metal-resin composite before being

disposed around a tire frame.

When the adhesive layer includes acid-modified polypropylene as a thermoplastic resin, the crystallinity of the adhesive layer is preferably higher from the viewpoint of improving adhesion. From the viewpoint of suppressing hardening of the adhesive layer to secure favorable riding comfort, the crystallinity of the adhesive layer is preferably lower. For example, the crystallinity of the adhesive layer is preferably 20% or more, more preferably 25% or more. The crystallinity of the adhesive layer is preferably 40% or less, more preferably 35% or less.

When the adhesive layer includes acid-modified polypropylene as a thermoplastic resin, from the viewpoint of achieving a desired crystallinity, the content of the acid-modified polypropylene in the adhesive layer is preferably 50% by mass or more, more preferably 60% by mass or more, further preferably 70% by mass or more.

(Elastic modulus)

The elastic modulus of the adhesive layer is preferably 2000 MPa or less. In that case, the resin layer is not too hard and a favorable riding comfort can be maintained. From the viewpoint of adhesion, the elastic modulus of the adhesive layer is more preferably 200 MPa or more.

In the specification, the elastic modulus of the adhesive layer refers to a tensile elastic modulus as measured according to JIS K7113:1995.

The adhesive layer may include an additive such as an adhesion-imparting resin, a softemer (plasticizer), an antioxidant (anti-aging agent) and a thermal stabilizer. In particular, by including carbon black, adhesion with respect to the metal member of the resin layer tends to improve.

Examples of the carbon black include furnace black obtained by a furnace method, channel black obtained by a channel method, acetylene black obtained by an acetylene method, and thermal black obtained by a thermal method. The type of the carbon black is not particularly limited, and may be used alone or in combination of two or more kinds.

The particle size of the carbon black is not specifically limited. For example, the average particle size may be from 0.03 μm to 20 μm, preferably from 0.05 μm to 10 μm, more preferably from 0.1 μm to 5 μm. Two or more kinds of carbon black having a different average particle diameter may be used in combination.

From the viewpoint of improving the adhesion of the adhesive layer with respect to the metal member, the content of the carbon black in the adhesive layer is preferably greater than 0% by mass of the total adhesive layer, more preferably 0.2% by mass or more, further preferably 0.4% by mass or more.

From the viewpoint of maintaining the durability of the adhesion layer, the content of the carbon black in the adhesive layer is preferably less than 4% by mass of the total adhesive layer, more preferably 3% by mass or less, further preferably 2.5% by mass or less.

The carbon black may be directly mixed with the other materials for the adhesive layer, or may be mixed in the form of a masterbatch. Examples of the masterbatch include a mixture of carbon black and a dispersant such as polyethylene, polypropylene or polyamide (preferably a dispersant that is compatible with a resin for forming the adhesive layer). The masterbatch may include an additive other than the dispersant.

Specific examples of the carbon black include those with product names of ASAHI #8, ASAHI #66, ASAHI #70, ASAHI #78, ASAHI #80, ASAHI #15HS, SBX55 and HS-500 from Asahi Carbon Co., Ltd. and those with product names of 9H, 9, 7HM600 and 5H from Tokai Carbon Co., Ltd. Specific examples of the masterbatch include a masterbatch with a product name of BEK-8136-A from Nippon Pigment Co., Ltd. and a masterbatch with a product name of BLACK PBF-640 from Resino Color Industry Co., Ltd.

The adhesive layer is preferably formed by using a hot melt adhesive.

In the specification, the "hot melt adhesive" refers to an adhesive including a thermoplastic resin as a main component and having a solid content of 95% by mass or more, preferably 99% by mass or more, more preferably 99.5% by mass or more, further preferably 100% by mass, and is in the form of a solid or a semisolid under at room temperature (25°C) and becomes molten by heating.

Since the hot melt adhesive is bonded to an object by applying the same in a melted state while heating, and solidifying the same by cooling, tight adhesion can be achieved even if the object has a rough surface. Therefore, the metal member and the resin layer can be tightly fixed and the pulling durability of the metal member with respect to the resin layer is considered to be improved. In addition, the hot melt adhesive has an advantage in terms of environment or productivity, since it contains a small amount of organic solvent or does not contain the same, and does not require a process for removing the solvent.

[Tire frame]

The tire frame includes a resin material. The resin material includes at least a resin, and examples of the resin include a thermoplastic resin, a thermoplastic elastomer and a thermosetting resin. From the viewpoint of mechanical durability, the resin material preferably includes a thermoplastic elastomer, more preferably polyamide thermoplastic

elastomer.

Examples of the thermosetting resin include phenol thermosetting resin, urea thermosetting resin, melamine thermosetting resin and epoxy thermosetting resin.

Examples of the thermoplastic resin include polyamide thermoplastic resin, polyester thermoplastic resin, olefinic thermoplastic resin, polyurethane thermoplastic resin, polyvinyl chloride thermoplastic resin and polystyrene thermoplastic resin. Among these, the thermoplastic resin is preferably at least one selected from the group consisting of polyamide thermoplastic resin, polyester thermoplastic resin and olefinic thermoplastic resin, more preferably at least one selected from the group consisting of polyamide thermoplastic resin and olefinic thermoplastic resin.

Examples of the thermoplastic elastomer include polyamide thermoplastic elastomer (TPA), polystyrene thermoplastic elastomer (TPS), polyurethane thermoplastic elastomer (TPU), olefinic thermoplastic elastomer (TPO), polyester thermoplastic elastomer (TPEE), thermoplastic rubber vulcanizate (TPV), and other thermoplastic elastomers (TPZ). The definition and the classification of the thermoplastic elastomer may rely on JIS K 6418:2007.

From the viewpoint of achieving elasticity required for the driving and formability during manufacture, the resin material for forming a tire frame is preferably a thermoplastic resin, more preferably a thermoplastic elastomer. In addition, when a polyamide thermoplastic resin is used for the resin layer in the metal-resin composite, a polyamide thermoplastic resin is preferably used for the tire frame.

Polyamide thermoplastic elastomer

The polyamide thermoplastic elastomer refers to a thermoplastic resin material that is a copolymer formed of a polymer that forms a hard segment that is crystalline and has a high melting point and a polymer that forms a soft segment that is amorphous and has a low glass transition temperature, wherein the polymer that forms a hard segment includes an amide bond (-CONH-) in its main chain.

Examples of the polyamide thermoplastic elastomer include a material in which at least a polyamide forms a hard segment that is crystalline and has a high melting point, and a polymer other than the polyamide (such as polyester or polyether) forms a soft segment that is amorphous and has a low glass transition temperature.

The polyamide thermoplastic elastomer may be formed by using a chain elongating agent (such as a dicarboxylic acid) in addition to the hard segment and the soft segment.

Specific examples of the polyamide thermoplastic elastomer include the polyamide thermoplastic elastomer (TPA) as defined in JIS K6418:2007 and the polyamide elastomer described in JP-A No. 2004-346273.

In the polyamide thermoplastic elastomer, examples of the polyamide that forms a hard segment include a polyamide formed from a monomer represented by the following Formula (1) or Formula (2).

$$H_2N\text{-}R^1\text{-}COOH \qquad (1)$$

In Formula (1), $R^1$ represents a hydrocarbon molecular chain having 2 to 20 carbon atoms (for example, an alkylene group having 2 to 20 carbon atoms).

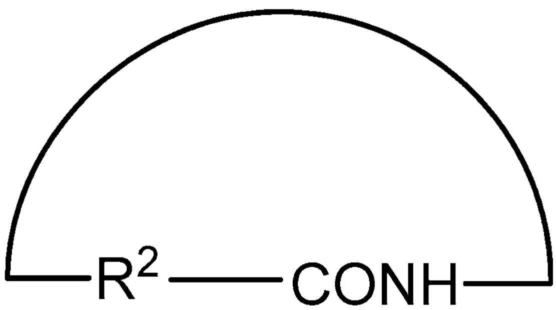

(2)

In Formula (2), $R^2$ represents a hydrocarbon molecular chain having 3 to 20 carbon atoms (for example, an alkylene group having 3 to 20 carbon atoms).

In Formula (1), $R^1$ is preferably a hydrocarbon molecular chain having 3 to 18 carbon atoms (for example, an alkylene group having 3 to 18 carbon atoms), more preferably a hydrocarbon molecular chain having 4 to 15 carbon atoms (for example, an alkylene group having 4 to 15 carbon atoms), further preferably a hydrocarbon molecular chain having 10 to 15 carbon atoms (for example, an alkylene group having 10 to 15 carbon atoms).

In Formula (2), $R^2$ is preferably a hydrocarbon molecular chain having 3 to 18 carbon atoms (for example, an alkylene group having 3 to 18 carbon atoms), more preferably a hydrocarbon molecular chain having 4 to 15 carbon atoms (for example, an alkylene group having 4 to 15 carbon atoms), further preferably a hydrocarbon molecular chain

having 10 to 15 carbon atoms (for example, an alkylene group having 10 to 15 carbon atoms).

Examples of the monomer represented by Formula (1) or Formula (2) include a ω-aminocarboxylic acid and a lactam. Examples of the polyamide that forms a hard segment include a polycondensate of a ω-aminocarboxylic acid or a lactam, and a polycondensate of a diamine and a dicarboxylic acid.

Examples of the ω-aminocarboxylic acid include aliphatic ω-aminocarboxylic acids having 5 to 20 carbon atoms, such as 6-aminocaproic acid, 7-aminoheptanoic acid, 8-aminooctanoic acid, 10-aminocapric acid, 11-aminoundecanoic acid and 12-aminododecanoic acid.

Examples of the lactam include aliphatic lactams having 5 to 20 carbon atoms, such as lauryllactam, ε-caprolactam, undecalactam, ω-enantholactam and 2-pyrrolidone.

Examples of the diamine include aliphatic diamines having 2 to 20 carbon atoms, such as ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-triemthylhexamethylenediamine, 2,4,4-trimethylhexamethylenediamine, 3-methylpentamethylenediamine and m-xylylenediamine.

The dicarboxylic acid may have a structure represented by HOOC-$(R^3)_m$-COOH ($R^3$ is a hydrocarbon molecular chain having 3 to 20 carbon atoms, and m is 0 or 1), and examples thereof include aliphatic dicarboxylic acids having 2 to 20 carbon atoms, such as oxalic acid, succinic acid, glutaric acid, adipic acid, pimelic acid, subric acid, azelaic acid, sebacic acid and dodecanedioic acid.

As the polyamide that forms a hard segment, a polyamide obtained by ring-opening polycondensation of laurryllacram, ε-caprolactam or udecanelactam is preferred.

Examples of the polymer that forms a soft segment include polyester and polyether, and specific examples thereof include polyethyelne glycol, polypropylene glycol, polytetramethylene ether glycol, and ABA-type triblock polyether. These polymers may be used alone or in combination of two or more kinds. It is also possible to use a polyether diamine or the like, which is obtained by allowing ammonia or the like to react with a terminal end of a polyether.

The ABA-type triblock polyether refers to a polyether having a structure represented by the following Formula (3).

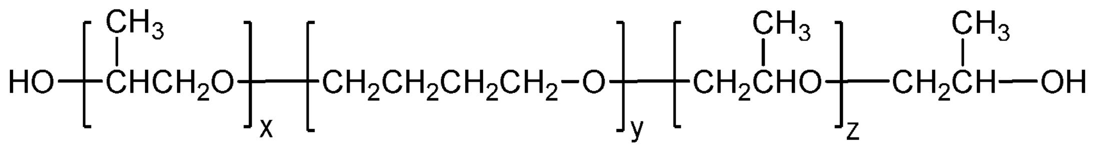

(3)

In Formula (3), each of x and z independently represents an integer of from 1 to 20, and y represents an integer of from 4 to 50.

In Formula (3), each of x and z is preferably independently an integer of from 1 to 18, more preferably an integer of from 1 to 16, further preferably an integer of from 1 to 14, yet further preferably an integer of from 1 to 12. In Formula (3), y is preferably an integer of from 5 to 45, more preferably an integer of from 6 to 40, further preferably an integer of from 7 to 35, yet further preferably an integer of from 8 to 30.

Examples of the combination of a hard segment and a soft segment include combinations of these selected from the hard segments and the soft segments as described above. Among the combinations, a combination of a ring-opening polycondensate of lauryl lactam and polyethylene glycol, a combination of a ring-opening polycondensate of lauryl lactam and polypropylene glycol, a combination of a ring-opening polycondensate of lauryl lactam and polytetramethylene ether glycol, and a combination of a ring-opening polycondensate of lauryl lactam and ABA-type triblock polyether are preferred. Among these combinations, a combination of a ring-opening polycondensate of lauryl lactam and ABA-type triblock polyether is more preferred.

The number average molecular weight of the polymer that forms a hard segment (polyamide) is preferably from 300 to 15000, from the viewpoint of melt moldability. The number average molecular weight of the polymer that forms a soft segment is preferably from 200 to 6000 from the viewpoint of toughness and low-temperature flexibility. The mass ratio (x : y) of the hard segment (x) and the soft segment (y) is preferably from 50 : 50 to 90 : 10, more preferably from 50 : 50 to 80 : 20, from the viewpoint of moldability.

The polyamide thermoplastic elastomer can be synthesized by a known process of copolymerizing a polymer that forms a hard segment and a polymer that forms a soft segment.

Examples of the commercially available products of the polyamide thermoplastic elastomer include the UBESTA XPA series of Ube Industries, Ltd. (for example, XPA9063X1, XPA9055X1, XPA9048X2, XPA9048X1, XPA9040X1, XPA9040X2 and XPA9044) and the VESTAMID series of Daicel-Evonik Ltd. (for example, E40-S3, E47-S1, E47-S3, E55-S1, E55-S3, EX9200 and E50-R2).

Since a polyamide thermoplastic elastomer satisfies the requirements for a tire frame in terms of elasticity (flexibility), toughness and the like, it is suitably used as the resin material. In addition, a polyamide thermoplastic

elastomer generally exhibits a favorable adhesion with respect to a thermoplastic resin or a thermoplastic elastomer. Therefore, selecting a polyamide thermoplastic elastomer as the resin material for a tire frame tends to increase the number of choices of a material for the coating composition in view of the adhesion between the tire frame and the resin layer of the metal-resin composite.

Polystyrene thermoplastic elastomer

Examples of the polystyrene thermoplastic elastomer include a material in which at least polystyrene forms a hard segment, and a polymer other than the polystyrene (such as polybutadiene, polyisoprene, polyethylene, hydrogenated polybutadiene or hydrogenated polyisoprene) forms a soft segment that is amorphous and has a low glass transition temperature.

Examples of the polystyrene that forms a hard segment include a polystyrene obtained by a known process such as radical polymerization or ionic polymerization, and specific examples thereof include a polystyrene obtained by anionic living polymerization.

Examples of the polystyrene that forms a soft segment include polybutadiene, polyisoprene and poly(2,3-dimethyl-butadiene).

Examples of the combination of a hard segment and a soft segment include combinations of these selected from the hard segments and the soft segments as described above. Among the combinations, a combination of polystyrene and polybutadiene and a combination of polystyrene and polyisoprene are preferred. In order to suppress unintentional crosslinking reaction of the thermoplastic elastomer, the soft segment is preferably hydrogenated.

The number average molecular weight of the polymer that forms a hard segment (polystyrene) is preferably from 5000 to 500000, more preferably from 10000 to 200000.

The number average molecular weight of the polymer that forms a soft segment is preferably from 5000 to 1000000, more preferably from 10000 to 800000, further preferably from 30000 to 500000. The mass ratio (x : y) of the hard segment (x) and the soft segment (y) is preferably from 5 : 95 to 80 : 20, more preferably from 10 : 90 to 70 : 30, from the viewpoint of moldability.

The polystyrene thermoplastic elastomer can be synthesized by a known process of copolymerizing a polymer that forms a hard segment and a polymer that forms a soft segment.

Examples of the polystyrene thermoplastic elastomer include styrene-butadiene copolymer such as SBS (polystyrene-poly(butylene)block-polystyrene) and SEBS (polystyrene-poly(ethylene/butylene)block-polystyrene); styrene-isoprene copolymer (polystyrene-polyisoprene block-polystyrene); and styrene-propylene copolymer such as SEP (polystyrene-(ethylene/propylene)block), SEPS (polystyrene-poly(ethylene/propylene)block-polystyrene), SEEPS (polystyrene-poly(ethylene-ethylene/propylene)block-polystyrene)block-polystyrene) and SEB (polystyrene(ethylene/butylene)block).

Examples of the commercially available products of the polystyrene thermoplastic elastomer include the TUFTEC series of Asahi Kasei Corporation (for example, H1031, H1041, H1043, H1051, H1052, H1053, H1062, H1082, H1141, H1221 and H1272), and the SEBS series of Kuraray Co., Ltd (for example, 8007 and 8076) and the SEPS series of Kuraray Co., Ltd (for example, 2002 and 2063).

Polyurethane thermoplastic elastomer

Examples of the polyurethane thermoplastic elastomer include a material in which at least polyurethane forms a hard segment that forms a pseudo-crosslinking structure by physical aggregation, and a polymer other than the polyurethane that forms a soft segment that is amorphous and has a low glass transition temperature.

Specific examples of the polyurethane thermoplastic elastomer include the polyurethane thermoplastic elastomer (TPU) as specified by JIS K6418:2007. The polyurethane thermoplastic elastomer may be a copolymer of a soft segment including a structural unit represented by the following Formula A and a hard segment including a structural unit represented by the following Formula B.

Formula A

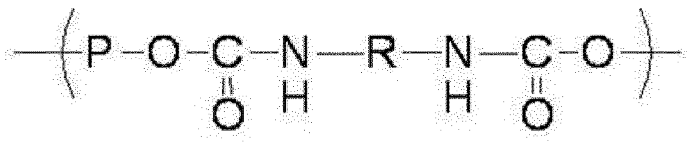

Formula B

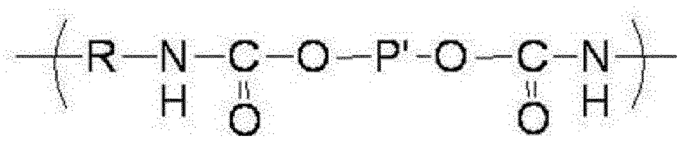

In the Formulae, P represents a long-chain aliphatic polyether or a long-chain aliphatic polyester. R represents an aliphatic hydrocarbon, an alicyclic hydrocarbon or an aromatic hydrocarbon. P' represents a short-chain aliphatic hydrocarbon, an alicyclic hydrocarbon or an aromatic hydrocarbon.

In Formula A, the long-chain aliphatic polyether or the long-chain aliphatic polyester represented by P may be a polyether or a polyester having a molecular weight of from 500 to 5000. The long-chain aliphatic polyether or the long-chain aliphatic polyester represented by P derives from a diol compound including the long-chain aliphatic polyether or the long-chain aliphatic polyester. Examples of the diol compound include polyethylene glycol, polypropylene glycol, polytetramethylene ether glycol, poly(butyleneadipate)diol, poly-ε-caprolactone diol, poly(hexamethylenecarbonate)diol and ABA-type triblock polyether compounds, having a molecular weight of the aforementioned range. These compounds may be used alone or in combination of two or more kinds.

In Formula A and Formula B, R derives from a diisocyanate compound including an aliphatic hydrocarbon, an alicyclic hydrocarbon or an aromatic hydrocarbon that is represented by R.

Examples of the diisocyanate compound including an aliphatic hydrocarbon represented by R include 1,2-ethylene diisocyanate, 1,3-propylene diisocyanate, 1,4-butane diisocyanate and 1,6-hexamethylene diisocyanate.

Examples of the diisocyanate compound including an alicyclic hydrocarbon represented by R include 1,4-cyclohexane diisocyanate and 4,4-cyclohexane diisocyanate.

Examples of the diisocyanate compound including an aromatic hydrocarbon represented by R include 4,4'-diphenylmethane diisocyanate and tolylene diisocyanate.

These compounds may be used alone or in combination of two or more kinds.

In Formula B, examples of the short-chain aliphatic hydrocarbon, the alicyclic hydrocarbon or the aromatic hydrocarbon represented by P' include those having a molecular weight of less than 500. P' derives from a diol compound including the short-chain aliphatic hydrocarbon, the alicyclic hydrocarbon or the aromatic hydrocarbon represented by P'.

Examples of the diol compound including a short-chain aliphatic hydrocarbon represented by P' include glycol and polyalkylene glycol, such as ethylene glycol, propylene glycol, trimethylene glycol, 1,4-butanediol, 1,3-butanediol, 1,5-pentanediol, 1,6-hexanediol, 1,7-heptanediol, 1,8-octanediol, 1,9-nonanediol, and 1,10-decanediol.

Examples of the diol compound including an alicyclic hydrocarbon represented by P' include cyclopentane-1,2-diol, cyclohexane-1,2-diol, cyclohexane-1,3-diol, cyclohexane-1,4-diol and cyclohexane-1,4-dimethanol.

Examples of the diol compound including an aromatic hydrocarbon represented by P' include hydroquinone, resorcin, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenyl ether, 4,4'-dihydroxydiphenyl sulfide, 4,4'-dihydroxydiphenylsulfone, 4,4'-dihydroxybenzophenone, 4,4'-dihydroxydiphenylmethane, bisphenol A, 1,1-di(4-hydroxyphenyl)cyclohexane, 1,2-bis(4-hydroxyphenoxy)ethane, 1,4-dihydroxynaphthalene and 2,6-dihydroxynaphthalene.

These compounds may be used alone or in combination of two or more kinds.

The number average molecular weight of the polymer that forms a hard segment (polyurethane) is preferably from 300 to 1500, from the viewpoint of melt moldability. The number average molecular weight of the polymer that forms a soft segment is preferably from 500 to 20000, more preferably from 500 to 5000, further preferably from 500 to 3000, from the viewpoint of flexibility and thermal stability of the polyurethane thermoplastic elastomer. The mass ratio (x : y) of the hard segment (x) and the soft segment (y) is preferably from 15 : 85 to 90 : 10, more preferably from 30 : 70 to 90 : 10, from the viewpoint of moldability.

The polyurethane thermoplastic elastomer may be synthesized by a known process of copolymerizing a polymer that forms a hard segment and a polymer that forms a soft segment. Examples of the polyurethane thermoplastic elastomer include the thermoplastic polyurethane described in JP-A No. 5-331256.

Specific examples of the polyurethane thermoplastic elastomer include a combination of a hard segment formed from an aromatic diol and an aromatic diisocyanate, and a soft segment formed from polycarbonate ester, preferably at least one selected from the group consisting of a copolymer of trilenediisocyanate (TDI) / polyester-based polyol, a copolymer of TDI / polyether-based polyol, a copolymer of TDI / caprolactone-based polyol, a copolymer of TDI / polycarbonate-based polyol, a copolymer of 4,4'-diphenylmethane diisocyanate (MDI) / polyester-based polyol, a copolymer of MDI / polyether-based polyol, a copolymer of MDI / caprolactone-based polyol, a copolymer of MDI / polycarbonate-based polyol, and a copolymer of MDI + hydroquinone / polyhexamethylene carbonate; more preferably at least one

selected from the group consisting of a copolymer of TDI / polyester-based polyol, a copolymer of TDI / polyether-based polyol, a copolymer of MDI / polyester-based polyol, a copolymer of MDI / polyether-based polyol, and a copolymer of MDI + hydroquinone / polyhexamethylene carbonate.

Examples of the commercially available products of the polyurethane thermoplastic elastomer include the ELASTOLLAN series of BASF Japan Ltd. (for example, ET680, ET690 and ET890), the KURAMIRON U series of Kuraray Co., Ltd. (for example, No. 2000 series, No. 3000 series, No. 8000 series and No. 9000 series), and the MIRACTRAN series of Nippon Miractran Co., Ltd. (for example, XN-2001, XN-2004, P390RSUP, P480RSUI, P26MRNAT, E490, E590 and P890).

Olefinic thermoplastic elastomer

Examples of the olefinic thermoplastic elastomer include materials in which at least polyolefin forms a hard segment that is crystal and has a high melting point and a polymer other than the polyolefin that forms a soft segment (for example, polyolefin, other polyolefin and a polyvinyl compound) forms a soft segment that is amorphous and has a low glass transition temperature. Examples of the polyolefin that forms a hard segment include polyethylene, polypropylene, isotactic polypropylene and polybutene.

Examples of the olefinic thermoplastic elastomer include an olefin-$\alpha$-olefin random copolymer and an olefin block copolymer.

Specific examples of the olefinic thermoplastic elastomer include propylene block copolymer, ethylene-propylene copolymer, propylene-1-hexene copolymer, propylene-4-methyl-1-pentene copolymer, propylene-1-butene copolymer, ethylene-1-hexene copolymer, ethylene-4-methyl-pentene copolymer, ethylene-1-butene copolymer, 1-butene-1-hexene copolymer, 1-butene-4-methyl-pentene copolymer, ethylene-methacrylic acid copolymer, ethylene-methyl methacrylate copolymer, ethylene-ethyl methacrylate copolymer, ethylene-butyl methacrylate copolymer, ethylene-methyl acrylate copolymer, ethylene-ethyl acrylate copolymer, ethylene-butyl acrylate copolymer, propylene-methacrylic acid copolymer, propylene-methyl methacrylate copolymer, propylene-ethyl methacrylate copolymer, propylene-butyl methacrylate copolymer, propylene-methyl acrylate copolymer, propylene-ethyl acrylate copolymer, propylene-butyl acrylate copolymer, ethylene-vinyl acetate copolymer and propylene-vinyl acetate copolymer.

Among these copolymers, the olefinic thermoplastic elastomer is preferably at least one selected from the group consisting of propylene block copolymer, ethylene-propylene copolymer, propylene-1-hexene copolymer, propylene-4-methyl-1-pentene copolymer, propylene-1-butene copolymer, ethyelne-1-hexene copolymer, ethyelne-4-methyl-pentene copolymer, ethylene-1-butene copolymer, ethylene-methacrylic acid copolymer, ethylene-methyl methacrylate copolymer, ethylene-ethyl methacrylate copolymer, ethylene-butyl methacrylate copolymer, ethylene-methyl acrylate copolymer, ethylene-ethyl acrylate copolymer, ethylene-butyl acrylate copolymer, propylene methacrylic acid copolymer, propylene-methyl methacrylate copolymer, propylene-ethyl methacrylate copolymer, propylene-butyl methacrylate copolymer, propylene-methyl acrylate copolymer, propylene-ethyl acrylate copolymer, propylene-butyl acrylate copolymer and propylene-vinyl acetate copolymer; more preferably at least one selected from the group consisting of ethylene-propylene copolymer, propylene-1-butene copolymer, ethylene-1-butene copolymer, ethylene-methyl methacrylate copolymer, ethylene-methyl acrylate copolymer, ethylene-ethyl acrylate copolymer and ethylene-butyl acrylate copolymer.

It is possible to combine two or more kinds of olefinic resins, such as ethylene and propylene. The content of the olefinic resin in the olefinic thermoplastic elastomer is preferably from 50% by mass to 100% by mass.

The number average molecular weight of the olefinic thermoplastic elastomer is preferably from 5000 to 10000000. When the number average molecular weight of the olefinic thermoplastic elastomer is from 5000 to 10000000, a resin material having sufficient mechanical properties and excellent processability can be obtained. From the same viewpoint, the number average molecular weight of the olefinic thermoplastic elastomer is more preferably from 7000 to 1000000, further preferably from 10000 to 1000000. When the number average molecular weight is within this rage, mechanical properties and processability of the resin material can be further improved.

The number average molecular weight of the polymer that forms a soft segment is preferably from 200 to 6000, from the viewpoint of toughness and flexibility at low temperature. The mass ratio (x : y) of the hard segment (x) and the soft segment (y) is preferably from 50 : 50 to 95 : 5, more preferably from 50 : 50 to 90 : 10, from the viewpoint of moldability.

The olefinic thermoplastic elastomer can be synthesized by a known process for copolymerization.

It is possible to use an acid-modified olefinic thermoplastic elastomer as the olefinic thermoplastic elastomer.

The acid-modified olefinic thermoplastic elastomer refers to an olefinic thermoplastic elastomer that is bonded with an unsaturated compound having an acidic group such as a carboxyl group, a sulfuric acid group or a phosphoric acid group.

Examples of the method of allowing an unsaturated compound having an acidic group to bond with an olefinic thermoplastic elastomer include a method of allowing an unsaturated bonding site of an unsaturated carboxylic acid (generally maleic acid anhydride) to bond with an olefinic thermoplastic elastomer.

The unsaturated compound having an acidic group is preferably an unsaturated compound having a carboxyl

group that is relatively weak in acidity, from the viewpoint of suppressing degradation of the olefinic thermoplastic elastomer, and examples of the unsaturated compound having a carboxyl group include acrylic acid, methacrylic acid, itaconic acid, crotonic acid, isocrotonic acid and maleic acid.

Examples of the commercially available products of the olefinic thermoplastic elastomer include the TAFMER series of Mitsui Chemicals, Inc. (for example, A0550S, A1050S, A4050S, A1070S, A4070S, A35070S, A1085S, A4085S, A7090, A70090, MH7007, MH7010, XM-7070, XM-7080, BL4000, BL2481, BL3110, BL3450, P-0275, P-0375, P-0775, P-0180, P-0280, P-0480 and P-0680), the NUCREL series of Du Pont-Mitsui Polychemicals Co., Ltd. (for example, AN4214C, AN4225C, AN42115C, N0903HC, N0908C, AN42012C, N410, N1050H, N1108C, N1110H, N1207C, N1214, AN4221C, N1525, N1560, N0200H, AN4228C, AN4213C and N035C), the ELVALOY AC series (for example, 1125AC, 1209AC, 1218AC, 1609AC, 1820AC, 1913AC, 2112AC, 2116AC, 2615AC, 2715AC, 3117AC, 3427AC and 3717AC), the ACRYFT series of Sumitomo Chemical Co., Ltd., the EVATATE series of Sumitomo Chemical Co., Ltd., the ULTRACENE series of Tosoh Corporation, the PRIME TPO series (for example, E-2900H, F-3900H, E-2900, F-3900, J-5900, E-2910, F-3910, J-5910, E-2710, F-3710, J-5910, E-2740, F-3740, R110MP, R110E, T310E and M142E).

Polyester thermoplastic elastomer

Examples of the polyester thermoplastic elastomer include a material in which at least polyester forms a hard segment that is crystalline and has a high melting point, and a polymer (for example, polyester or polyether) forms a soft segment that is amorphous and has a low glass transition temperature.

The polyester that forms a hard segment may be an aromatic polyester.

The aromatic polyester can be formed from, for example, an aromatic dicarboxylic acid or an ester-forming derivative thereof and an aliphatic diol. A preferred example of the aromatic polyester is a polybutylene terephthalate derived from terephthalic acid and/or dimethyl terephthalate and 1,4-butanediol. Other examples of the aromatic polyester include a polyester derived from a dicarboxylic acid (for example, isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid and an ester-forming derivative thereof) and a diol compound having a molecular weight of 300 or less (for example, an aliphatic diol such as ethylene glycol, trimethylene glycol, pentamethylene glycol, hexamethylene glycol, neopentyl glycol and decamethyelene glycol, an alicyclic diol such as 1,4-cyclohexane dimethanol and tricyclodecane dimethylol, and an aromatic diol such as xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl] cyclohexane, 4,4'-dihydroxy-p-terphenyl and 4,4'-dihydroxy-p-quaterphenyl).

The polyester may be a copolymerized polyester in which two or more dicarboxylic acid components and two or more diol components are combined.

It is also possible to copolymerize a polyfunctional (at least trifunctional) carboxylic component such as a polyfunctional hydroxy acid component in an amount of within 5 mol%.

Preferred examples of the polyester that forms a hard segment include polyethylene terephthalate, polybutylene terephthalate, polymethylene terephthalate and polyethylene naphthalate, polybuthylene naphthalate, wherein polybutylene terephthalate is more preferred.

Examples of the polymer that forms a soft segment include an aliphatic polyester and an aliphatic polyether.

Examples of the aliphatic polyether include poly(ethylene oxide)glycol, poly(propylene oxide)glycol, poly(tetramethylene oxide) glycol, poly(hexamethylene oxide)glycol, a copolymer of ethylene oxide and propylene oxide, an ethylene oxide-adduct of poly(propylene oxide)glycol, and a copolymer of ethylene oxide and tetrahydrofuran.

Examples of the aliphatic polyester include poly(ε-caprolactone), polyenantholactone, polycaprylolactone, polybutylene adipate, and polyethylene adipate.

Among these aliphatic polyethers and aliphatic polyesters, from the viewpoint of elasticity of a polyester block copolymer, the polymer that forms a soft segment is preferably poly(tetramethylene oxide)glycol, an ethylene oxide-adduct of poly(propylene oxide)glycol, poly(ε-caprolactone), polybutylene adipate and polyethylene adipate are preferred.

The number average molecular weight of the polymer that forms a soft segment is preferably from 300 to 6000, from the viewpoint of toughness and low-temperature flexibility. The mass ratio (x : y) of the hard segment (x) and the soft segment (y) is preferably from 99 : 1 to 20 : 80, more preferably from 98 : 2 to 30 : 70, from the viewpoint of moldability.

Examples of the combination of a hard segment and a soft segment include each of the combination of a hard segment and a soft segment as mentioned above.

Among these, the combination of a hard segment and a soft segment is preferably a combination in which a hard segment is polybutylene terephthalate and a soft segment is an aliphatic polyether, more preferably a combination in which a hard segment is polybutylene terephthalate and a soft segment is poly(ethylene oxide)glycol.

Examples of the commercially available products of the polyester thermoplastic elastomer include the HYTREL series of Du Pont-Toray Co., Ltd. (for example, 3046, 5557, 6347, 4047 and 4767) and the PELPRENE series of Toyobo Co., Ltd. (for example, P30B, P40B, P40H, P55B, P70B, P150B, P280B, P450B, P150M, S1001, S2001, S5001, S6001

and S9001).

The polyester thermoplastic elastomer can be synthesized by copolymerizing a polymer that forms a hard segment and a polymer that forms a soft segment by a known process.

The melting point of the resin material is generally approximately from 100°C to 350°C. From the viewpoint of durability and productivity of the tire, the melting point of the resin material is preferably from 100°C to 250°C, more preferably from 120°C to 250°C.

The resin material may include a component other than the thermoplastic elastomer, as necessary. Examples of the component include a rubber, a thermoplastic resin, filler (such as silica, calcium carbonate and clay), an anti-aging agent, an oil, a plasticizer, a color former and a weatherproof agent.

The tensile elastic modulus of the resin material (tire frame) as defined by JIS K7113:1995 is preferably from 50 MPa to 1000 MPa, more preferably from 50 MPa to 800 MPa, further preferably from 50 MPa to 700 MPa. When the elastic modulus of the resin material is from 50 MPa to 1000 MPa, attachment of the tire to a rim can be efficiently performed while maintaining the shape of the tire frame.

The tensile strength of the resin material (tire frame) as defined by JIS K7113:1995 is generally approximately from 15 MPa to 70 MPa, preferably from 17 MPa to 60 MPa, more preferably from 20 MPa to 55 MPa.

The tensile yield strength of the resin material (tire frame) as defined by JIS K7113:1995 is preferably 5 MPa to more, more preferably from 5 MPa to 20 MPa, further preferably from 5 MPa to 17 MPa. When the tensile yield strength of the resin material is 5 MPa or more, endurance of the tire against deformation caused by a load applied to the tire during running can be improved.

The tensile yield elongation of the resin material (tire frame) as defined by JIS K7113:1995 is preferably 10% or more, more preferably from 10% to 70%, further preferably from 15% to 60%. When the tensile yield elongation of the resin material is 10% or more, the elastic region is large and attachment to a rim can be favorably performed.

The tensile elongation at break of the resin material (tire frame) as defined by JIS K7113:1995 is preferably 50% or more, more preferably 100% or more, further preferably 150% or more, yet further preferably 200% or more. When the tensile elongation at break of the resin material is 50% or more, attachment to a rim can be favorably performed and breakage caused by impact can be suppressed.

The deflection temperature under load (0.45MPa) of the resin material (tire frame) as defined by ISO 75-2 or ASTM D648 is preferably 50°C or more, more preferably from 50°C to 150°C, further preferably from 50°C to 130°C. When the deflection temperature under load is 50°C or more, deformation of the tire frame can be suppressed even in a case of performing vulcanization in the production of the tire.

The Martens hardness of the tire frame (d1), the Martens hardness of the resin layer (d2) and the Martens hardness of the adhesive layer (d3) preferably satisfy a relationship of d1 ≦ d2 < d3. When the resin layer has a Martens hardness that is smaller than that of the adhesive layer but is greater than or equal to that of the tire frame, difference in stiffness between the resin material that forms the tire frame and the metal member can be relaxed effectively. As a result, durability of the tire can be further improved.

In the following, embodiments of the tire of the disclosure are explained by referring to the drawings. The drawings (Figs. 1A, 1B, 2, 3 and 4) are described in a schematic manner, and the size or the shape of each member illustrated therein is emphasized as necessary for ease of understanding.

[First Embodiment]

Fig. 1A is a schematic view of a section of a portion of tire 10. Fig. 1B is a sectional view of a bead portion of tire 10 when it is attached to a rim. As shown in Fig. 1A, tire 10 has a sectional shape similar to that of a conventional rubber tire.

Tire 10 has tire frame 17 that includes a pair of bead portions 12 that are in contact with bead sheet 21 and rim flange 22 of rim 20; side portions 14 that extend from bead portions 12 along the tire diameter direction; and crown portion 16 (outer periphery portion, corresponds to a tread) that connects the outer edge in the tire diameter direction of one side portion 14 and the outer edge in the tire diameter direction of the other one of side portion 14. Tire frame 17 is formed of a resin material (for example, polyamide thermoplastic elastomer).

Tire frame 17 is formed by bonding an equatorial plane of a pair of tire frame halves 17A. Each tire frame half 17A has a ring shape consisting of bead portion 12, side portion 14 and a half of crown portion 16 that are integrally molded.

Bead core 18 that is formed of a steel cord having a ring shape is embedded in bead portion 12, as a conventional general pneumatic tire. In addition, seal layer 24 that is formed of a rubber having a ring shape, which has a better sealing property than the resin material that forms tire frame 17, at a portion at which bead portion 12 contacts rim 20 or at least a rim flange 22 of rim 20.

Around crown portion 16, metal-resin composite 26 (reinforcing cord) is wound in a spiral manner along the circumferential direction of tire frame 17, in such a manner that at least a part of metal-resin composite 26 is embedded in crown portion 16. In addition, tread 30 that is formed of a rubber, which has a better friction resistance than the material

that forms tire frame 17, is disposed at the outer side in a tire radial direction of metal-resin composite 26. Details of metal-resin composite 26 are described later.

In this embodiment, since tire frame 17 is formed from a resin material, the production thereof does not require vulcanization and the process can be simplified and the time can be shortened, contrary to a conventional tire frame formed of rubber. In addition, since the tire frame halves 17A have the same shape, production thereof can be performed with only one mold.

Although tire frame 17 of tire 10 of the first embodiment is totally formed from the resin material, the tire of the disclosure is not limited thereto and different resin materials may be used for respective portions of tire frame 17 (such as side portions 14, crown portion 16 and bead portions 12). Further, a reinforcing material (such as a fiber, a cord, a nonwoven fabric and a cloth that are made of a polymer material or a metal) may be embedded in tire frame 17 in order to reinforce the same.

Although tire frame half 17A of tire 10 of the first embodiment is produced by injection molding, the production method is not limited thereto and may be performed by vacuum molding, pressure molding, melt casting or the like. In addition, although tire 10 is formed by two members (tire frame halves 17A), the production method is not limited thereto and may be formed from a single member, or three or more members, by a molten core method using a metal having a low melting point, a split core method, blow molding or the like.

In this embodiment, bead core 18 that is a steel cord having a ring shape is embedded in bead portion 12. Bead core 18 may be a material other than a steel cord, such as an organic fiber cord, a resin-coated organic fiber cord, or a hard resin. It is possible to omit bead core 18 as long as stiffness of bead portion 12 is secured and attachment to rim 20 is properly performed.

In this embodiment, seal layer 24 having a ring shape is formed at a portion at which bead portion 12 contacts rim 20 or at least rim flange 22. Seal layer 24 may be formed also at a portion at which tire frame 17 (bead portion 12) contacts bead sheet 21. When a rubber is used as the material for seal layer 24, the rubber is preferably the same kind as a rubber used for an outer side of a bead portion of a conventional rubber tire. Seal layer 24 can be omitted if the resin material for tire frame 17 has a sufficient sealing property with respect to rim 20.

Seal layer 24 may be formed from a thermoplastic resin or a thermoplastic elastomer that has a better sealing property than the resin material for forming tire frame 17. Examples of the thermoplastic resin include polyurethane resin, olefinic resin, polystyrene resin, polyester resin, or a blend of these resins with a rubber or an elastomer. Examples of the thermoplastic elastomer include polyester thermoplastic elastomer, polyurethane thermoplastic elastomer, olefinic thermoplastic elastomer, combination of these elastomers, or a blend of these elastomers with a rubber.

Fig. 2 shows a sectional view of tire 10 of this embodiment, in which metal-resin composite 26 is embedded in a crown portion of tire frame 17.

As shown in Fig. 2, metal-resin composite 26 is disposed in a spiral manner, and at least a part of metal-resin composite 26 is embedded in crown portion 16. At a portion at which metal-resin composite 26 is embedded in crown portion 16, metal-resin composite 26 is in close contact with the resin material that forms crown portion 16 (tire frame 17). The L in Fig. 2 indicates a depth of embedment of metal-resin composite 26 in crown portion 16 (tire frame 17). In an embodiment, the depth L is 1/2 of D, which is the diameter of metal-resin composite 26.

Metal-resin composite 26 has a structure in which metal member 27 (for example, a steel cord formed by twisting steel fibers) is covered with resin layer 28 via adhesive layer 25. At an outer side of metal-resin composite 26, tread 30 made of rubber is disposed, and tread 30 has a tread pattern of plural grooves on a surface that contacts the ground, like a conventional rubber tire.

In an embodiment, metal-resin composite 26 has resin layer 28 including a thermoplastic elastomer and is closely embedded in tire frame 17 that is formed of a resin material of the same kind as the thermoplastic elastomer included in resin layer 28. In this case, a large contact area of resin layer 28 and tire frame 17 is secured, thereby improving adhesion durability of metal-resin composite 26 and tire frame 17. As a result, a tire having excellent durability can be obtained.

The depth of embedment of metal-resin composite 26 to crown portion 16 (L) is preferably 1/5 or more of the diameter of metal-resin composite 26 (D), more preferably greater than 1/2. In a more preferred embodiment, metal-resin composite 26 is totally embedded in crown portion 16. When L is greater than 1/2 of D, protrusion of metal-resin composite 26 from the embedded portion is suppressed. When metal-resin composite 26 is totally embedded in crown portion 16, a flat surface (outer circumference) is obtained and inclusion of air around metal-resin composite 26 is suppressed even when a member is disposed on crown portion 16 in which metal-resin composite 26 is embedded.

In this embodiment, although tread 30 is made of rubber, tread 30 may be formed from a thermoplastic resin material that exhibits a better friction resistance than the resin material that forms tire frame 17, instead of rubber.

In the following, a manufacturing method of the tire of the first embodiment is explained.

(Tire frame forming process)

First, a pair of tire frame halves, which are supported by a supporting ring formed of a thin metal material, are disposed to face each other. Then, a welding mold is disposed so as to contact the outer surface of the welding potion of the tire frame halves. The welding mold is configured such that it applies a predetermined pressure to a portion around the welding portion (abutting portion) of the tire frame halves (not shown). Then, a pressure is applied to a portion around the welding portion of the tire frame halves at a temperature that is equal to or higher than the melting point (softening point) of the thermoplastic resin material (in this embodiment, polyamide thermoplastic elastomer) used for the tire frame, whereby the welding portion is melted and the tire frame halves are thermally bonded, and tire frame 17 is formed.

(Metal-resin composite forming process)

Metal member 27 is reeled out from a reel and the surface thereof is washed. Subsequently, metal member 27 is covered with a thermoplastic resin (in this embodiment, acid-modified polypropylene) that is extruded from an extruder to form adhesive layer 25. This is further covered with a resin material (in this embodiment, polyamide thermoplastic elastomer) to form resin layer 28, thereby obtaining metal-resin composite 26. The metal-resin composite 26 is reeled in reel 58.

(Metal-resin composite winding process)

Fig. 3 is a drawing illustrating the operation of positioning metal-resin composite 26 on a crown portion of a tire frame with a heater and rollers.

In Fig. 3, metal-resin composite supply apparatus 56 is equipped with reel 58 around which metal-resin composite 26 is wound; heating apparatus 59 disposed downstream of reel 58 in a direction in which metal-resin composite 26 is conveyed; first roller 60 disposed downstream of reel 58 in a direction in which metal-resin composite 26 conveyed; first cylinder 62 that moves to allow first roller 60 to approach a surface of a tire; second roller 64 disposed downstream of first roller 60 in a direction in which metal-resin composite 26 is conveyed; and second cylinder 66 that moves to allow second roller 64 to approach a surface of a tire. Second roller 64 may be used also as a cooling roller made of metal. Surfaces of first roller 60 and second roller 64 are coated with a fluororesin (in this embodiment, TEFLON (registered trade name)) in order to suppress adhesion of a molten or softened resin material. By using this apparatus, the heated metal-resin composite is tightly integrated with the resin of a tire frame.

Heating apparatus 59 is equipped with heater 70 and fan 72 for generating a hot wind. Further, heating apparatus 59 is equipped with heating box 74 having a space in which the generated hot wind is supplied and resin-metal composite 26 is allowed to pass, and outlet 76 from which metal-resin composite 26 that has been heated is discharged.

In this process, first, the temperature of heater 70 of metal-resin composite heating apparatus 59 is increased a hot air is supplied to heating box 74 by a wind generated by rotating fan 72. Then, metal-resin composite 26 is reeled out from reel 58 and conveyed to heating box 74, and heated (for example, to a temperature of from approximately 100°C to 250°C). The heated metal-resin composite 26 is conveyed through outlet 76, and disposed around crown portion 16 of tire frame 17, which rotates in a direction shown as R in Fig. 3, in a spiral manner with a constant tension. When the resin layer of metal-resin composite 26 contacts crown portion 16, the resin material of crown portion 16 at a portion in contact with the resin layer of metal-resin composite 26 is molten or softened, and the resin layer is welded and integrated with crown portion 16. At this time, since metal-resin composite 26 is welded also with an adjacent metal-resin composite 26, metal-resin composite 26 is wound around so as not to form a space therebetween, so as to suppress inclusion of air at a portion at which metal-resin composite 26 is embedded.

The depth of embedment of metal-resin composite 26 (L) may be adjusted by a heating temperature of metal-resin composite 26, a tension to be applied to metal-resin composite 26, a pressure of first roller 60, and the like. In an embodiment, the conditions are adjusted such that L is at least 1/5 of the diameter of metal-resin composite 26 (D).

Subsequently, tread 30 having a belt-like shape is wound around the outer surface of tire frame 17 in which metal-resin composite 26 is embedded, and this is subjected to heating (vulcanization) in a vulcanizing case or a mold. Tread 30 may be formed of unvulcanized rubber or vulcanized rubber.

Then, seal layer 24, which is formed of vulcanized rubber, is bonded to bead portion 12 of tire frame 17 with an adhesive, thereby obtaining tire 10.

In the method of producing a tire of the first embodiment, although welding of tire frame halves 17A is performed by heating the same with a welding mold, the disclosure is not limited thereto. For example, the heating may be performed by a high-frequency heater or the like. Alternatively, tire frame halves 17A may be welded by preliminarily softening or melting the same by heating with a hot air or infrared radiation, and pressing with a welding mold.

In the method of producing a tire of the first embodiment, although metal-resin composite supply apparatus 56 has two rollers (first roller 60 and second roller 64), the disclosure is not limited thereto. For example, metal-resin

composite supply apparatus 56 may have either one of these rollers.

In the method of producing a tire of the first embodiment, although a surface of tire frame 17 is melted or softened at a portion in contact with metal-resin composite 26 that has been heated, the disclosure is not limited thereto. For example, embedment of metal-resin composite 26 in crown portion 16 may be performed by heating a surface of crown portion 16 by using a hot air generator without heating metal-resin composite 26.

In the method of producing a tire of the first embodiment, although the heating of metal-resin composite 26 is performed by using a heater and a fan, the disclosure is not limited thereto. For example, metal-resin composite 26 may be heated directly with radiation heat (such as infrared rays).

In the method of producing a tire of the first embodiment, although a melted or softened portion of the thermoplastic resin material in which metal-resin composite 26 is embedded is cooled by second roller 64 made of metal, the disclosure is not limited thereto. For example, the melted or softened portion may be cooled by a cool wind.

The winding of metal-resin composite 26 is performed in a spiral manner for ease of production. However, the winding of metal-resin composite 26 may be performed in a different manner, such as positioning the same in a discontinuous manner in a width direction.

The tire produced by the method of producing a tire of the first embodiment is a tubeless tire (i.e., an air room is formed between tire 10 and rim 20 by attaching bead portion 12 to rim 20). However, the disclosure is not limited thereto. For example, the tire may have a different structure such as a complete tube shape.

The embodiments as mentioned above for explaining the tire of the disclosure are described as one example, and may be modified in a various manner within the scope of the disclosure. It is also noted that the scope of the disclosure is not limited to the embodiments as mentioned above.

The following are exemplary embodiments of the tire of the disclosure.

<1> A tire comprising a tire frame that comprises a resin material and has a circular shape, and a belt portion that comprises a metal-resin composite that is disposed around the tire frame, the metal-resin composite having a structure in which a metal member, an adhesive layer and a resin layer are disposed in this order, and satisfying the following Formula (1) and Formula (2):

$$\text{Formula (1): } 23 \leqq \text{number of metal-resin composites in the belt portion / width of the belt portion (mm)} \times 100$$

$$\text{Formula (2): } 1 / \{(a/A)+(b/B)\} \leqq 210$$

wherein, in Formula (2), A is a water permeation index of the resin layer that is from 50 g • mm/(m$^2$ • day) to 600 g • mm/(m$^2$ • day), B is a water permeation index of the adhesive layer that is from 5 g • mm/(m$^2$ • day) to 300 g • mm/(m$^2$ • day), a is a thickness of the resin layer that is from 0.015 mm to 1.5 mm and b is a thickness of the adhesive layer that is from 0.005 mm to 0.2 mm.

<2> The tire according to <1>, wherein, in Formula (1), a number of the metal-resin composites per 100 mm of tread width is 86 or less.

<3> The tire according to <1> or <2>, wherein a distance between adjacent metal-resin composites is from 0.2 mm to 3.3 mm.

<4> The tire according to any one of <1> to <3>, wherein, in Formula (2), a+b is less than 1.6 mm.

<5> The tire according to any one of <1> to <4>, wherein the adhesive layer comprises a polyolefin thermoplastic resin.

<6> The tire according to any one of <1> to <5>, wherein the adhesive layer comprises carbon black and a content of carbon black is greater than 0% by mass and less than 4% by mass of the adhesive layer.

<7> The tire according to any one of <1> to <6>, wherein the resin layer comprises at least one selected from the group consisting of a polyamide thermoplastic resin and a polyamide thermoplastic elastomer.

[Examples]

In the following, the disclosure is explained in further details with reference to the Examples. However, the disclosure is not limited to these Examples.

<Preparation of metal-resin composite>

A metal-resin composite was prepared by a process as described in the method of producing a tire of the first embodiment. Specifically, an adhesive layer is formed around a metal member by attaching a melted resin material to the metal member. Then, a resin layer is formed by covering the adhesive layer with a resin material extruded from an extruder, and cooling.

As the metal member, a multifilament with an average diameter of 1.15 mm produced by twisting five monofilaments with an average diameter of 0.35 mm (steel, strength: 280N, elongation: 3%) was used.

<Preparation of tire>

A tire was prepared by the method of producing a tire of the first embodiment as mentioned above. Specifically, a metal-resin composite as prepared above was disposed around an outer periphery (crown portion) of a tire frame, which was produced from polyamide thermoplastic elastomer, thereby forming a belt portion. Then, a tread rubber is disposed on the belt portion and vulcanized, thereby obtaining a tire (tire size: 245/35 R18).

The type (No.) of the materials used for the preparation of the metal-resin composite, the thickness of the resin layer (mm), the type (No.) of the resin material used for the adhesive layer, the content of carbon black in the adhesive layer (parts by mass), the crystallinity of the adhesive layer after vulcanization (%), the total thickness of the resin layer and the adhesive layer (mm), the number of metal-resin composites in the belt portion (100 mm in width), the value of 1/{(a/A)+(b/B)}, and the result of evaluation of properties (details are described later) are described in Table 1. The following are the details of the resin materials used in the Examples and the Comparative Examples.

Resin for resin layer 1: polyamide thermoplastic elastomer (Ube Industries, Ltd., XPA9055), water permeation index: 140 g • mm/($m^2$ • day)
Resin for resin layer 2: polyamide thermoplastic elastomer (Ube Industries, Ltd., XPA9048), water permeation index: 280 g • mm/($m^2$ • day)
Resin for resin layer 3: polyamide thermoplastic elastomer prepared by the following process, water permeation index: 400 g • mm/($m^2$ • day)
Resin for resin layer 4: polyester thermoplastic elastomer (Du Pont-Toray Co., Ltd., 5557), water permeation index: 220 g • mm/($m^2$ • day)
Resin for resin layer 5: polyester thermoplastic elastomer blend (Du Pont-Toray Co., Ltd., 5557 and 6347, 5557/6347=70/30), water permeation index: 190 g • mm/($m^2$ • day)
Resin for resin layer 6: polyester thermoplastic elastomer blend (Du Pont-Toray Co., Ltd., 5557 and 6347, 5557/6347=50/50), water permeation index: 200 g • mm/($m^2$ • day)
Resin for resin layer 7: polyester thermoplastic elastomer blend (Du Pont-Toray Co., Ltd., 5557 and 4767N, 5557/4767N=30/70), water permeation index: 250 g • mm/($m^2$ • day)
Resin for resin layer 8: polyester thermoplastic elastomer blend (Du Pont-Toray Co., Ltd., 5557 and 4767N, 5557/4767N=50/50), water permeation index: 240 g • mm/($m^2$ • day)

(Preparation of resin for resin layer 3)

Caprolactam (470 g), dodecanedioic acid (173 g) and aminohexanoic acid (37 g) (Sigma-Aldrich) were placed in a 2L container equipped with a stirrer, a nitrogen-gas inlet and a condensation-water outlet, and the inside was sufficiently substituted with nitrogen. Then, the temperature was increased to 250°C and allowed to react for 4 hours under pressure of 0.6 MPa. After releasing the pressure, the reaction was continued for 1 hour under a nitrogen stream and washed with water. A white solid was obtained as PA6 (nylon 6, registered trademark), number average molecular weight: 1200).

The PA6 (a polymer for forming a hard segment) (200 g) was mixed with PPG/PTMG/PPG (a polymer for forming a soft segment, Huntsman Corporation, JEFFAMINE (registered trademark) RT-1000) (164 g). The mixture was stirred for 7 hours at 230°C under a nitrogen stream. Then, caprolactam (Sigma-Aldrich) (7.1 g) and IRGANOX 1010 (BASF) (1 g) were added, and a white polyamide thermoplastic elastomer was obtained as resin for resin layer 3.

Resin for adhesive layer 1: acid-modified polypropylene hot melt adhesive (Mitsui Chemicals, Inc., QE060), water permeation index: 10 g • mm/($m^2$ • day)
Resin for adhesive layer 2: polyamide hot melt adhesive (ARKEMA, B409), water permeation index: 100 g • mm/($m^2$ • day)
Resin for adhesive layer 3: polyamide hot melt adhesive (Daicel-Evonik Ltd., A6492), water permeation index: 50 g • mm/($m^2$ • day)

Resin for adhesive layer 4: polyester hot melt adhesive (Mitsubishi Chemical Corporation, GQ331), water permeation index: 500 g • mm/($m^2$ • day)
Resin for adhesive layer 5: polyester hot melt adhesive (Mitsubishi Chemical Corporation, GQ730), water permeation index: 150 g • mm/($m^2$ • day)
Resin for adhesive layer 6: acid-modified polypropylene hot melt adhesive (Mitsubishi Chemical Corporation, QF500), water permeation index: 5 g • mm/($m^2$ • day)
Resin for adhesive layer 7: polypropylene resin (Prime Polymer Co., Ltd., J-700GP), water permeation index: 3 g • mm/($m^2$ • day)
Resin for adhesive layer 8: acid-modified polypropylene hot melt adhesive (Mitsubishi Chemical Corporation, QE840), water permeation index: 10 g • mm/($m^2$ • day)
Resin for adhesive layer 9: acid-modified polypropylene hot melt adhesive (Mitsubishi Chemical Corporation, QB515), water permeation index: 10 g • mm/($m^2$ • day)

<Measurement of crystallinity of adhesive layer after vulcanization>

The crystallinity of the adhesive layer after vulcanization was measured by differential scanning calorimetry (DSC) according to a method as described above.

Specifically, a sample was prepared from a resin used for the adhesive layer was heated under the same conditions as the vulcanization of a tire, and the crystallinity of the sample after heating was measured.

In order to perform the heating under the same conditions as the vulcanization of a tire, the temperature of a portion of a tire near the center line, corresponding to the adhesive layer, was measured during heating. Then, the sample was heated at the measured temperature and the time.

<Water pressure test>

The tire as prepared in the Examples and the Comparative Examples were combined with a rim, and water was introduced inside the tire. A water pressure at which the tire broke and a state of the breakage were evaluated. The water pressure at which the tire broke was converted to an index with respect to the water pressure at which the tire of Comparative Example 4 broke given as 100. The result is evaluated by the following criteria. The greater value refers to better durability.

(Evaluation criteria)

A: greater than 110
B: greater than 100 but not greater than 110
C: not greater than 100

<Adhesion test after degradation treatment>

The metal-resin composite prepared in the Examples and the Comparative Examples was subjected to a degradation treatment for 3 weeks at a temperature of 80°C and a humidity of 90%. Then, the peel force (N) was measured by the same method as the following initial adhesive test, and evaluated by the following criteria.

(Evaluation criteria)

A: The peel force after the degradation test was 75% or more of the peel force immediately after the preparation.
B: The peel force after the degradation test was 50% or more but less than 75% of the peel force immediately after the preparation.
C: The peel force after the degradation test was less than 50% of the peel force immediately after the preparation.

<Initial adhesion test>

As a criterion for adhesion between the adhesive layer and the metal member, a peel force when the adhesive layer and the resin layer were peeled from the metal member immediately after the preparation of the metal-resin

composite was measured.

Specifically, a 180° peel test was performed by using a tester (A&D Company, Limited., TENSIRON RTF-1210) at a tensile rate of 100 mm/min at room temperature (25°C), thereby measuring a peel force (N). The peel force (N) as evaluated by the following criteria.

(Evaluation criteria)

A: The peel force is 17 N or greater
B: The peel force is 14 N or greater but less than 17 N
C: The peel force is 10 N or greater but less than 14 N
D: The peel force is less than 10 N

<JIS drum test after degradation treatment>

The tire prepared in the Examples and the Comparative Examples was filled with air to have an inner pressure of 250 kPa, and a degradation treatment was performed for 10 days at a temperature of 80°C and a humidity of 90%. Then, a drum test was performed and the result was evaluated according to the following criteria.

The inner pressure of the tire was adjusted to 3.0 $kg/cm^2$ and left to stand for 24 hours in a room at $25\pm2$°C. Then, the air pressure was readjusted, and the tire was allowed to run on a drum with a diameter of approximately 3 m, at 60km/h for a maximum distance of 20,000 km, while allying a load of twice the JIS load.

The running distance of the tire until the breakage was measured and evaluated according to the following criteria. The longer running distance indicates a better durability of the tire, and A is considered to be preferred in terms of practical use.

(Evaluation criteria)

A: The tire completed the running distance of 20,000 km
B: The running distance until breakage was from 10,000 km to less than 20,000 km
C: The running distance until breakage was less than 10,000 km

Table 1

| | | Examples | | | | | | | | | | | | | | | | | Comparative Examples | | | | |
|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 1 | 2 | 3 | 4 | 5 |
| Resin for Resin layer | | 1 | 1 | 1 | 1 | 1 | 1 | 1 | 2 | 3 | 1 | 1 | 1 | 1 | 1 | 1 | 1 | 1 | 1 | 1 | 1 | 1 | 1 |
| a [mm] | | 0.47 | 0.4 | 0.2 | 0.01 | 0.7 | 1.5 | 0.4 | 0.4 | 0.4 | 0.47 | 0.47 | 0.47 | 0.47 | 0.47 | 0.47 | 0.47 | 0.47 | 0.49 | 0.02 | 0.4 | 1.6 | 0.01 |
| Resin for Adhesive layer | | 1 | 1 | 1 | 1 | 1 | 1 | 3 | 1 | 1 | 1 | 1 | 1 | 1 | 1 | 1 | 1 | 4 | 1 | 1 | 2 | 1 | 1 |
| b [mm] | | 0.03 | 0.1 | 0.3 | 0.1 | 0.1 | 0.1 | 0.1 | 0.1 | 0.1 | 0.03 | 0.03 | 0.03 | 0.03 | 0.03 | 0.03 | 0.03 | 0.1 | 0.01 | 0.04 | 0.1 | 0.1 | 0.01 |
| Carbon Black [parts by mass] | | 0 | 0 | 0 | 0 | 0 | 0 | 0 | 0 | 0 | 0 | 0 | 0.1 | 0 | 0 | 0 | 0 | 0 | 0 | 0 | 0 | 0 | 0 |
| crystallinity after vulcanization | | 36 | 36 | 36 | 36 | 36 | 36 | 19 | 36 | 36 | 36 | 36 | 32 | 16 | 21 | 39 | 44 | 5 | 36 | 36 | 27 | 36 | 36 |
| c [mm] | | 0.5 | 0.5 | 0.5 | 0.11 | 0.8 | 1.6 | 0.5 | 0.5 | 0.5 | 0.5 | 0.5 | 0.5 | 0.5 | 0.5 | 0.5 | 0.5 | 0.5 | 0.5 | 0.06 | 0.5 | 1.7 | 0.02 |
| numer per 100 mm of tread width | | 47 | 47 | 47 | 74 | 37 | 23 | 47 | 47 | 47 | 23 | 23 | 47 | 47 | 47 | 47 | 47 | 47 | 47 | 80 | 47 | 22 | 86 |
| 1/{(a/A)+(b/B)} | | 157 | 78 | 32 | 99 | 67 | 48 | 206 | 88 | 91 | 157 | 157 | 157 | 180 | 180 | 150 | 180 | 206 | 222 | 241 | 259 | 47 | 1728 |
| distance between metal members [mm] | | 1 | 1 | 1 | 0.22 | 1.6 | 3.2 | 1 | 1 | 1 | 3.2 | 3.3 | 1 | 1 | 1 | 1 | 1 | 1 | 1 | 0.12 | 1 | 3.4 | 0.03 |
| Results | Water pressure test | A | A | A | B | A | B | A | A | A | A | B | A | A | A | A | A | A | A | A | A | C | A |
| | Adhesion test after degradation treatment | A | A | A | A | A | A | A | A | A | A | A | A | A | A | A | A | A | C | C | C | A | C |
| | Initial adhesion test | B | B | B | C | B | B | B | B | B | B | B | A | C | B | B | B | B | B | B | B | B | B |
| | JIS drumtest after degradation treatment | A | A | A | B | A | B | A | A | A | A | A | A | B | A | A | A | A | C | C | C | A | C |

Table 2

| | | Examples | | | | | | | | | | | | Comparative Examples | | | |
|---|---|---|---|---|---|---|---|---|---|---|---|---|---|---|---|---|---|
| | | 18 | 19 | 20 | 21 | 22 | 23 | 24 | 25 | 26 | 27 | 28 | 29 | 6 | 7 | 8 | 9 |
| Resin for Resin layer | | 1 | 1 | 4 | 4 | 1 | 1 | 1 | 1 | 5 | 6 | 7 | 8 | 1 | 1 | 4 | 4 |
| a [mm] | | 0.7 | 0.7 | 1.2 | 1.2 | 0.47 | 0.7 | 0.47 | 0.47 | 1.2 | 1.2 | 1.2 | 1.2 | 0.47 | 0.47 | 0.47 | 0.47 |
| Resin for Adhesive layer | | 4 | 5 | 4 | 5 | 6 | 7 | 8 | 9 | 5 | 5 | 5 | 5 | 4 | 5 | 4 | 5 |
| b [mm] | | 0.03 | 0.03 | 0.03 | 0.03 | 0.03 | 0.03 | 0.03 | 0.03 | 0.03 | 0.03 | 0.03 | 0.03 | 0.03 | 0.03 | 0.03 | 0.03 |
| Carbon Black [parts by mass] | | 0 | 0 | 0 | 0 | 0 | 0 | 0 | 0 | 0 | 0 | 0 | 0 | 0 | 0 | 0 | 0 |
| crystallinity after vulcanization | | 3 | 5 | 3 | 5 | 37 | 43 | 32 | 34 | 5 | 5 | 5 | 5 | 3 | 5 | 3 | 5 |
| c [mm] | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| numer per 100 mm of tread width | | 39 | 39 | 28 | 28 | 47 | 47 | 47 | 47 | 28 | 28 | 28 | 28 | 47 | 47 | 47 | 47 |
| 1/{(a/A)+(b/B)} | | 198 | 192 | 181 | 177 | 107 | 75 | 157 | 157 | 153 | 161 | 200 | 192 | 293 | 281 | 455 | 428 |
| distance between metal members [mm] | | 1.5 | 1.5 | 2.5 | 2.5 | 1 | 1 | 1 | 1 | 2.5 | 2.5 | 2.5 | 2.5 | 1 | 1 | 1 | 1 |
| Results | Water pressure test | A | A | B | B | A | B | A | A | B | B | B | B | A | A | A | A |
| | Adhesion test after degradation treatment | A | A | A | A | A | A | A | A | A | A | A | A | C | C | C | C |
| | Initial adhesion test | B | B | B | B | B | C | A | B | B | B | B | B | B | B | B | B |
| | JIS drum test after degradation treatment | A | A | A | A | A | B | A | A | A | A | A | A | C | C | C | C |
| Examples 4, 17, 18, 20 and 23 are provided for reference only. | | | | | | | | | | | | | | | | | |

As shown in Table 1 and Table 2, the tire including the metal-resin composite as prepared in the Examples, which satisfies Formula (1) and Formula (2), exhibited favorable evaluation results in each test. Among the Examples, Example 12, in which the adhesive layer includes carbon black by 0.1% by mass, exhibited a superior result in the initial adhesion test.

Comparative Example 4, in which the metal-resin composite does not satisfy Formula (1), exhibited a poor result in the water pressure test.

Comparative Examples 1, 2, 3 and 5-9, in which the metal-resin composite does not satisfy Formula (2), exhibited a poor result in the adhesion test after degradation treatment.

In view of the above, the tire of the invention exhibits excellent resistance to inner pressure and an excellent resistance to moisture and heat.

**Claims**

1. A tire (10) comprising a tire frame (17) that comprises a resin material and has a circular shape, and a belt portion that comprises a metal-resin composite (26) that is disposed around the tire frame (17),
the metal-resin composite (26) having a structure in which a metal member (27), an adhesive layer (25) and a resin layer (28) are disposed in this order, and **characterised in that** the following Formula (1) and Formula (2) are satisfied:

$$\text{Formula (1): } 23 \leqq \text{number of metal-resin composites (26) in the belt portion / width of the belt portion (mm)} \times 100$$

$$\text{Formula (2): } 1 / \{(a/A)+(b/B)\} \leqq 210$$

wherein, in Formula (2), A is a water permeation index of the resin layer (28) that is from 50 g • mm/($m^2$ • day) to 600 g • mm/($m^2$ • day), B is a water permeation index of the adhesive layer (25) that is from 5 g • mm/($m^2$ • day) to 300 g • mm/($m^2$ • day), a is a thickness of the resin layer (28) that is from 0.015 mm to 1.5 mm and b is a thickness of the adhesive layer (25) that is from 0.005 mm to 0.2 mm.

2. The tire (10) according to claim 1, wherein, in Formula (1), a number of the metal-resin composites (26) per 100 mm of tread width is 86 or less.

3. The tire (10) according to claim 1 or claim 2, wherein a distance between adjacent metal-resin composites (26) is from 0.2 mm to 3.3 mm.

4. The tire (10) according to any one of claim 1 to claim 3, wherein, in Formula (2), a+b is less than 1.6 mm.

5. The tire (10) according to any one of claim 1 to claim 4, wherein the adhesive layer (25) comprises a polyolefin thermoplastic resin.

6. The tire (10) according to any one of claim 1 to claim 5, wherein the adhesive layer (25) comprises carbon black and a content of carbon black is greater than 0% by mass and less than 4% by mass of the adhesive layer (25).

7. The tire (10) according to any one of claim 1 to claim 6, wherein the resin layer (28) comprises at least one selected from the group consisting of a polyamide thermoplastic resin and a polyamide thermoplastic elastomer.

8. The tire (10) according to any one of claim 1 to claim 6, wherein the resin layer (28) comprises a polyamide thermoplastic resin.

9. The tire (10) according to claim 3, wherein the distance between the adjacent metal-resin composites (26) is from 0.4 mm to 2.5 mm.

10. The tire (10) according to claim 3, wherein the distance between the adjacent metal-resin composites (26) is from 0.8 mm to 2.1 mm.

**11.** The tire (10) according to any one of claim 1 to claim 4, wherein, in Formula (2), a is in a range from 0.05 mm to 1.0 mm, b is in a range from 0.01 mm to 0.18 mm.

**12.** The tire (10) according to claim 6, wherein the content of carbon black is 0.4% by mass or more and less than 2.5% by mass of the adhesive layer (25).

**13.** The tire (10) according to any one of claim 1 to claim 12, wherein the metal-resin composite (26) has a structure in which one or plural cords of the metal-resin composite (26) are disposed along a circumferential direction.

**Patentansprüche**

**1.** Reifen (10), der einen Reifenrahmen (17) umfasst, der einen Harzwerkstoff umfasst und eine kreisförmige Gestalt aufweist, und einen Gürtelabschnitt, der einen Metall-Harz-Verbundwerkstoff (26) umfasst, der um den Reifenrahmen (17) angeordnet ist, umfasst,
wobei der Metall-Harz-Verbundwerkstoff (26) eine Struktur aufweist, in der ein Metallelement (27), eine Klebstoffschicht (25) und eine Harzschicht (28) in dieser Reihenfolge angeordnet sind, und **dadurch gekennzeichnet, dass** die Formel (1) und die Formel (2), wie folgt, erfüllt sind:

$$\text{Formel (1): } 23 \leq \text{Anzahl von Metall-Harz-Verbundwerkstoffen (26) in dem Gürtelabschnitt/Breite des Gürtelabschnitts (mm)} \times 100,$$

$$\text{Formel (2): } 1/\{(a/A) + (b/B)\} \leq 210,$$

wobei, in Formel (2), A ein Wasserpermeationsindex der Harzschicht (28) ist, der von 50 g · mm/($m^2$ · Tag) bis 600 g · mm/($m^2$ · Tag) beträgt, B ein Wasserpermeationsindex der Klebstoffschicht (25) ist, der 5 g · mm/($m^2$ · Tag) bis 300 g · mm/($m^2$ · Tag) beträgt, a eine Dicke der Harzschicht (28) ist, die von 0,015 mm bis 1,5 mm beträgt, und b eine Dicke der Klebstoffschicht (25) ist, die von 0,005 mm bis 0,2 mm beträgt.

**2.** Reifen (10) nach Anspruch 1, wobei, in Formel (1), eine Anzahl der Metall-Harz-Verbundwerkstoffe (26) je 100 mm einer Laufflächenbreite 86 oder weniger beträgt.

**3.** Reifen (10) nach Anspruch 1 oder Anspruch 2, wobei eine Entfernung zwischen benachbarten Metall-Harz-Verbundwerkstoffen (26) von 0,2 mm bis 3,3 mm beträgt.

**4.** Reifen (10) nach einem der Ansprüche 1 bis 3, wobei, in Formel (2), a + b kleiner als 1,6 mm ist.

**5.** Reifen (10) nach einem der Ansprüche 1 bis 4, wobei die Klebstoffschicht (25) ein thermoplastisches Polyolefinharz umfasst.

**6.** Reifen (10) nach einem der Ansprüche 1 bis 5, wobei die Klebstoffschicht (25) Ruß umfasst und ein Gehalt an Ruß größer als 0 Gew.-% und kleiner als 4 Gew.-% der Klebstoffschicht (25) ist.

**7.** Reifen (10) nach einem der Ansprüche 1 bis 6, wobei die Harzschicht (28) mindestens eines umfasst, das ausgewählt ist aus der Gruppe, die aus einem thermoplastischen Polyamidharz und einem thermoplastischen Polyamidelastomer besteht.

**8.** Reifen (10) nach einem der Ansprüche 1 bis 6, wobei die Harzschicht (28) ein thermoplastisches Polyamidharz umfasst.

**9.** Reifen (10) nach Anspruch 3, wobei die Entfernung zwischen den benachbarten Metall-Harz-Verbundwerkstoffen (26) von 0,4 mm bis 2,5 mm beträgt.

**10.** Reifen (10) nach Anspruch 3, wobei die Entfernung zwischen den benachbarten Metall-Harz-Verbundwerkstoffen (26) von 0,8 mm bis 2,1 mm beträgt.

11. Reifen (10) nach einem der Ansprüche 1 bis 4, wobei, in Formel (2), a in einem Bereich von 0,05 mm bis 1,0 mm liegt, b in einem Bereich von 0,01 mm bis 0,18 mm liegt.

12. Reifen (10) nach Anspruch 6, wobei der Gehalt an Ruß 0,4 Gew.-% oder mehr und weniger als 2,5 Gew.-% der Klebstoffschicht (25) beträgt.

13. Reifen (10) nach einem der Ansprüche 1 bis 12, wobei der Metall-Harz-Verbundwerkstoff (26) eine Struktur aufweist, in der ein oder mehrere Kords des Metall-Harz-Verbundwerkstoffs (26) entlang einer Umfangsrichtung angeordnet sind.

**Revendications**

1. Bandage pneumatique (10), comprenant un cadre de bandage pneumatique (17) comprenant un matériau de résine et ayant une forme circulaire, et une partie de ceinture comprenant un composite de métal-résine (26) disposé autour du cadre du bandage pneumatique (17) ;
le composite de métal-résine (26) ayant une structure dans laquelle un élément de métal (27), une couche adhésive (25) et une couche de résine (28) sont disposés dans cet ordre, et **caractérisé en ce que** les formule (1) et formule (2) ci-dessous sont satisfaites :

$$\text{formule (1)} : 23 \leq \text{nombre de composites de métal-résine (26) dans la partie de ceinture/ largeur de la partie de ceinture (mm)} \times 100 ;$$

$$\text{formule (2)} : 1 / \{(a/A) + (b/B)\} \leq 210$$

dans lequel, dans la formule (2), A est un indice de perméation d'eau de la couche de résine (28) compris entre 50 $g \cdot mm/(m^2 \cdot jour)$ et 600 $g \cdot mm/(m^2 \cdot jour)$, B est un indice de perméation d'eau de la couche adhésive (25) compris entre 5 $g \cdot mm/(m^2 \cdot jour)$ et 300 $g \cdot mm/(m^2 \cdot jour)$, a représente une épaisseur de la couche de résine (28) comprise entre 0,015 mm et 1,5 mm et b représente une épaisseur de la couche adhésive (25) comprise entre 0,005 mm et 0,2 mm.

2. Bandage pneumatique (10) selon la revendication 1, dans lequel, dans la formule (1), un nombre de composites de métal-résine (26) par 100 mm d'une largeur de la bande de roulement correspond à 86 ou moins.

3. Bandage pneumatique (10) selon la revendication 1 ou la revendication 2, dans lequel une distance entre des composites de métal-résine adjacents (26) est comprise entre 0,2 mm et 3,3 mm.

4. Bandage pneumatique (10) selon l'une quelconque des revendications 1 à 3, dans lequel, dans la formule (2), la valeur de a + b est inférieure à 1,6 mm.

5. Bandage pneumatique (10) selon l'une quelconque des revendications 1 à 4, dans lequel la couche adhésive (25) comprend une résine thermoplastique de polyoléfine.

6. Bandage pneumatique (10) selon l'une quelconque des revendications 1 à 5, dans lequel la couche adhésive (25) comprend du noir de carbone et une teneur en noir de carbone représente plus de 0% en poids et moins de 4% en poids de la couche adhésive (25).

7. Bandage pneumatique (10) selon l'une quelconque des revendications 1 à 6, dans lequel la couche de résine (28) comprend au moins un matériau sélectionné dans le groupe constitué d'une résine thermoplastique de polyamide, et d'un élastomère thermoplastique de polyamide.

8. Bandage pneumatique (10) selon l'une quelconque des revendications 1 à 6, dans lequel la couche de résine (28) comprend une résine thermoplastique de polyamide.

9. Bandage pneumatique (10) selon la revendication 3, dans lequel la distance entre des composites de métal-résine

adjacents (26) est comprise entre 0,4 mm et 2,5 mm.

**10.** Bandage pneumatique (10) selon la revendication, 3, dans lequel la distance entre des composites de métal-résine adjacents (26) est comprise entre 0,8 mm et 2,1 mm.

**11.** Bandage pneumatique (10) selon l'une quelconque des revendications 1 à 4, dans lequel, dans la formule (2), a est comprise dans un intervalle de 0,05 mm à 1,0 mm, b étant comprise dans un intervalle de 0,01 à 0,18 mm.

**12.** Bandage pneumatique (10) selon la revendication 6, dans lequel la teneur en noir de carbone représente 0,4% en poids ou plus et moins de 2,5% en poids de la couche adhésive (25).

**13.** Bandage pneumatique (10) selon l'une quelconque des revendications 1 à 12, dans lequel le composite de métal-résine (26) a une structure dans laquelle un ou plusieurs câblés du composite métal-résine (26) sont disposés le long d'une direction circonférentielle.

FIG. 1A

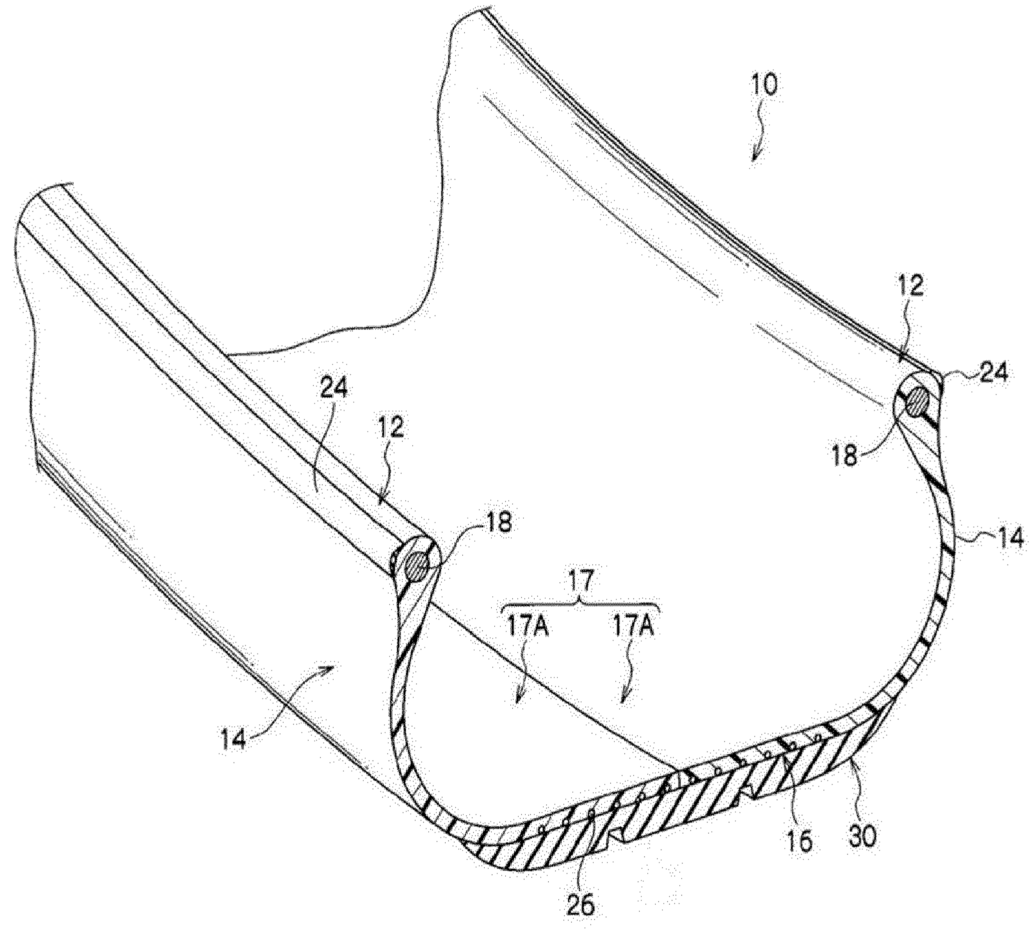


FIG. 1B

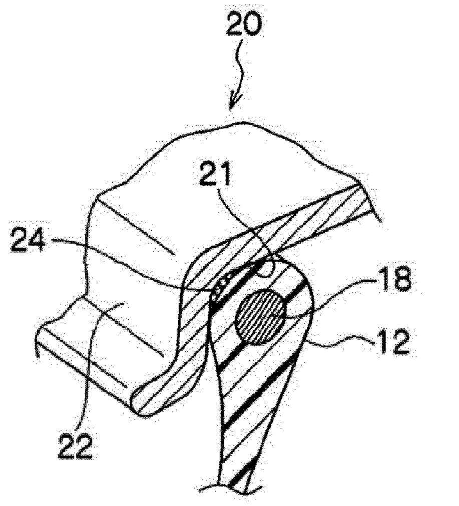

FIG. 2

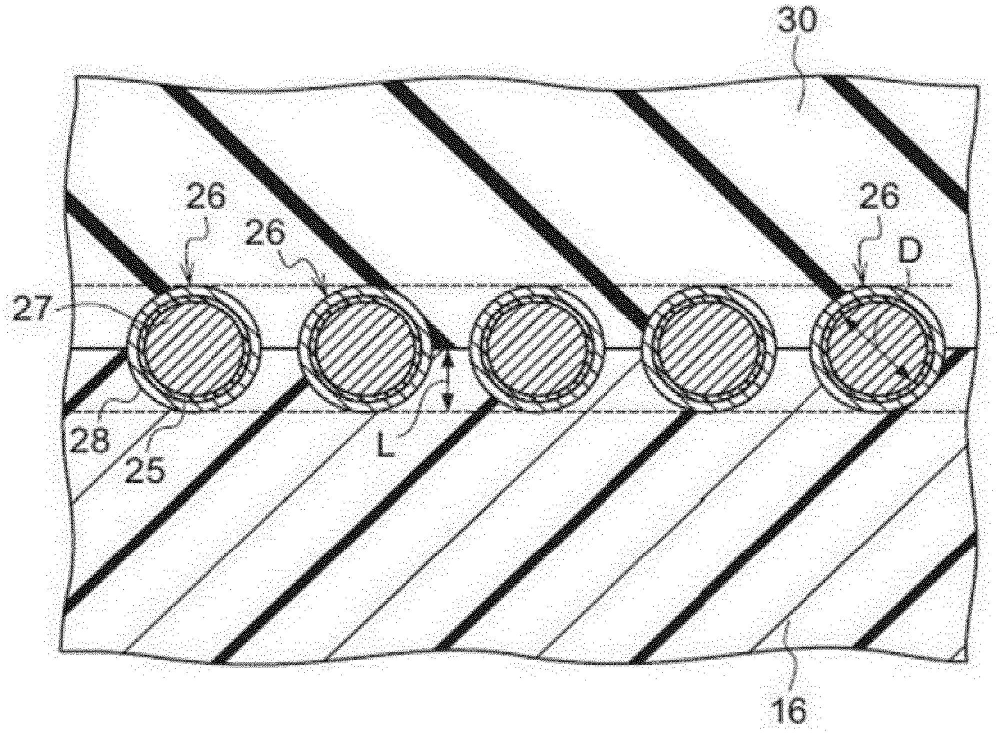

FIG. 3

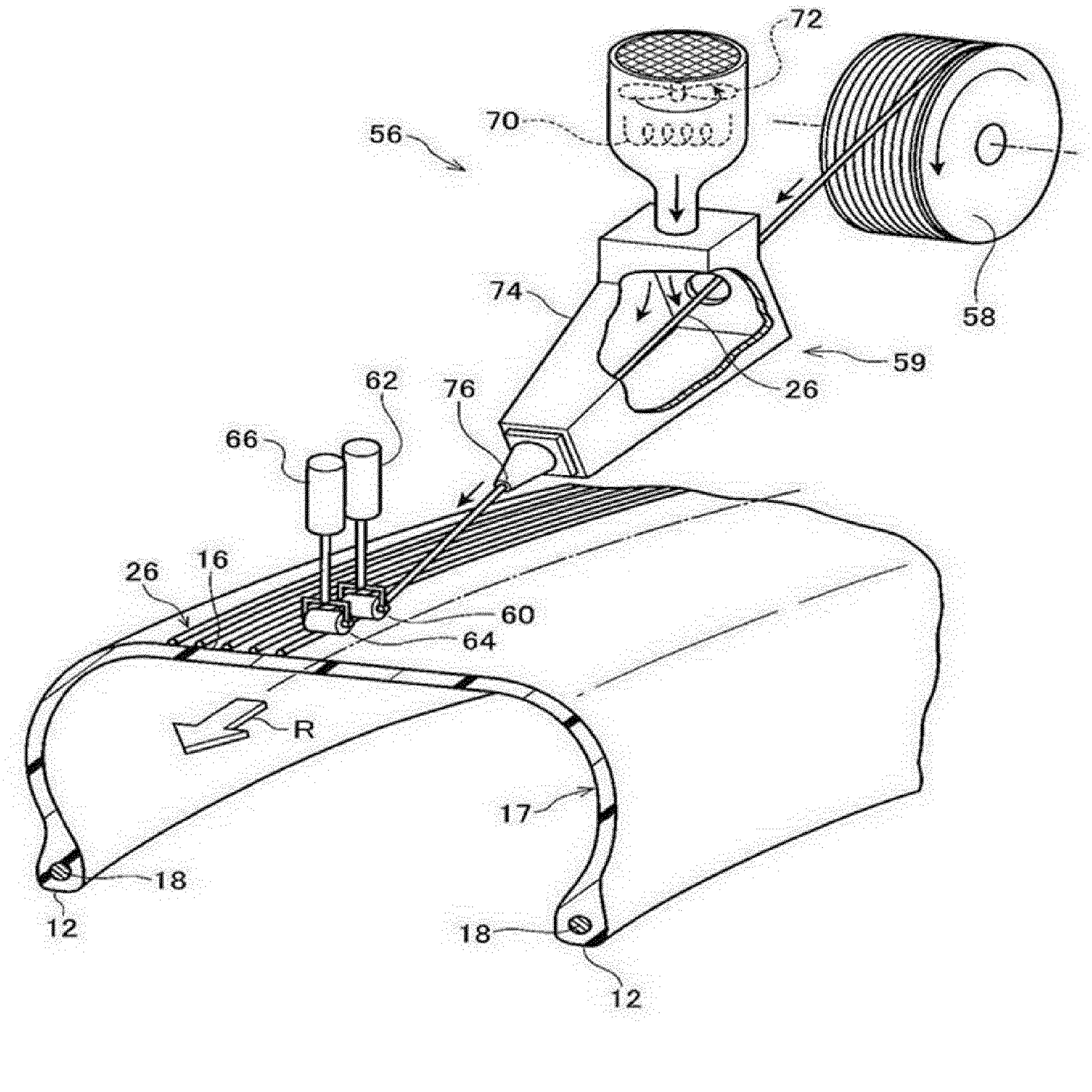

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014175453 A
- JP 2004346273 A
- JP 5331256 A